(19) Europäisches Patentamt
European Patent Office
Office européen des brevets

(11) **EP 1 691 344 B1**

(12) **EUROPEAN PATENT SPECIFICATION**

(45) Date of publication and mention
of the grant of the patent:
**24.06.2009 Bulletin 2009/26**

(21) Application number: **04818533.4**

(22) Date of filing: **12.11.2004**

(51) Int Cl.:
*G10L 15/06* (2006.01) *H04R 3/00* (2006.01)

(86) International application number:
**PCT/JP2004/016883**

(87) International publication number:
**WO 2005/048239 (26.05.2005 Gazette 2005/21)**

(54) **SPEECH RECOGNITION SYSTEM**

SPRACHERKENNUNGSSYSTEM

SYSTEME DE RECONNAISSANCE VOCALE

(84) Designated Contracting States:
**DE FR GB**

(30) Priority: **12.11.2003 JP 2003383072**

(43) Date of publication of application:
**16.08.2006 Bulletin 2006/33**

(73) Proprietor: **HONDA MOTOR CO., LTD.**
**Tokyo 107-8556 (JP)**

(72) Inventors:
• **NAKADAI, Kazuhiro**
**3510193 (JP)**
• **TSUJINO, Hiroshi**
**3510193 (JP)**
• **OKUNO, Hiroshi**
**1102, Form Higashi Toin Sanjyo**
**Nakagyo-ku**
**Kyoto-shi, Kyoto 6048135 (JP)**
• **YAMAMOTO, Shunichi**
**3510188 (JP)**

(74) Representative: **Piésold, Alexander James**
**Frank B. Dehn & Co.**
**St Bride's House**
**10 Salisbury Square**
**London**
**EC4Y 8JD (GB)**

(56) References cited:
JP-A- 3 274 593       JP-A- 8 044 387
JP-A- 11 143 486      JP-A- 2000 066 698
JP-A- 2002 041 079    JP-A- 2002 264 051

• NAKADAI K ET AL: "Robot recognizes three simultaneous speech by active audition" PROCEEDINGS OF THE 2003 IEEE INTERNATIONAL CONFERENCE ON ROBOTICS AND AUTOMATION. ICRA 2003. TAIPEI, TAWAN, SEPT. 14 - 19, 2003, PROCEEDINGS OF THE IEEE INTERNATIONAL CONFERENCE ON ROBOTICS AND AUTOMATION, NEW YORK, NY : IEEE, US, vol. VOL. 1 OF 3, 14 September 2003 (2003-09-14), pages 398-405, XP010667329 ISBN: 0-7803-7736-2

• LLEIDA E ET AL: "Robust continuous speech recognition system based on a microphone array" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, vol. 1, 12 May 1998 (1998-05-12), pages 241-244, XP010279154 ISBN: 0-7803-4428-6

• NAKADAI K ET AL: "Epipolar geometry based sound localization and extraction for humanoid audition" PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001, IEEE/RSJ INTERNATIONAL CONFERENCE ON INTELLIGENT ROBOTS AND SYSTEMS, NEW YORK, NY : IEEE, US, vol. VOL. 1 OF 4, 29 October 2001 (2001-10-29), pages 1395-1401, XP010573769 ISBN: 0-7803-6612-3

EP 1 691 344 B1

- **NAKATANI T ET AL: "Harmonic sound stream segregation using localization and its application to speech stream segregation" SPEECH COMMUNICATION, ELSEVIER SCIENCE PUBLISHERS, AMSTERDAM, NL, vol. 27, no. 3-4, April 1999 (1999-04), pages 209-222, XP004163251 ISSN: 0167-6393**
- **NAKADAI K. ET AL.: 'Kaisoteki na shichokaku togo to sanran riron o riyo chita robot ni yoru sanwasha doji hatsuwa ninshiki no kojo' THE ROBOTICS SOCIETY OF JAPAN GAKUJUTSU KOENKAI YOKOSHU 20 September 2003, XP002997484**
- **NAKADAI K. ET AL.: 'Active audition ni yoru fukusu ongen no teii bunri ninshiki' THE JAPANESE SOCIETY FOR ARTIFICIAL INTELLIGENCE KENKYUKAI SHIRYO SIG-CHALLENGE-0216-5 22 November 2002, pages 25 - 32, XP002997485**
- **NAKADAI K. ET AL.: 'Robot o taisho to shita sanran riron ni yoru sanwasha doji hatsuwa no teii bunri ninshiki no kojo' THE JAPANESE SOCIETY FOR ARTIFICIAL INTELLIGENCE KENKYUKAI SHIRYO SIG-CHALLENGE-0216-5 13 November 2003, pages 33 - 38, XP002997486**
- **NAKAGAI K. ET AL.: 'Robot recognizes three simultaneous speech by activie audition' PROC. OF THE 2003 IEEE 14 September 2003, pages 398 - 405, XP010667329**

**Description**

FIELD OF THE INVENTION

The present invention relates to an automatic speech recognition system and, more particularly, to an automatic speech recognition system which is able to recognize speeches with high accuracy, when a speaker and a moving object having an automatic speech recognition system are moving around.

BACKGROUND OF THE INVENTION

A technique for speech recognition, which has been recently developed so much as to reach practical use, has been started to apply to an area such as inputting of information in the form of speech. Also research and development of robots has been flourishing, which induces a situation in which the technique for speech recognition technically plays a key role in putting a robot to practical use. This is ascribed to the fact that intelligently social interaction between a robot and a human requires the former to understand human language, increasing the importance of accuracy achieved in speech recognition.

There are several problems in conducting communication with a speaker, different from speech recognition, which is carried out in a laboratory by inputting speeches through a microphone which is placed near a mouth of the speaker.

For example, since there are various types of noise in an actual environment, it is not possible to succeed in speech recognition unless necessary speech signals are separated from the noise. When there is a plurality of speakers, it is necessary to extract speeches of a specified speaker to be recognized. A Hidden Markov Model (HMM) is generally used for speech recognition. This model is not free of a problem that a recognition rate is adversely affected by the fact that a voice of a speaker sounds different according to positions of the speaker (relative to a microphone of an automatic speech recognition system).

A research group including the inventors of the present invention disclosed a technique that performs localization, separation and recognition of a plurality of sound sources by active audition (see no-patent document 1).

This technique, which has two microphones provided at positions corresponding to ears of a human, enables recognition of words uttered by one speaker when a plurality of speakers simultaneously utter words. More specifically speaking, the technique localizes the speakers based on acoustic signals entered through the two microphones and separates speeches for each speaker so as to recognize them. In this recognition, acoustic models are generated beforehand, which are adjusted to directions covering a range of -90˚ to 90˚ at intervals of 10˚ as viewed from a moving object (such as a robot having an automatic speech recognition system). When speech recognition is performed, processes with these acoustic models are carried out in parallel.

No-patent document 1: "A humanoid Listens to three simultaneous talkers by Integrating Active Audition and Face Recognition" Kazuhiro Nakadai, et al., IJCAI-03 Workshop on Issues in Designing Physical Agents for Dynamic Real-Time Environments: World Modeling, Planning, Learning and Communicating, PP117-124

"Robot recognizes three simultaneous speech by active audition", Nakadai et al., Proceedings of the IEEE International Conference on Robotics and Automation, New York, NY: IEEE, US, vol. 1 OF 3, 14 September 2003, pages 398-405, XP010667329, discloses a similar automatic speech recognition system arranged to integrate the results of speech recognition by each of the multiple stored acoustic models carried out in parallel, and, on the basis of a cost function take the majority and select the best result from the multiple acoustic models.

SUMMARY OF THE INVENTION

The conventional technique described above has posed a problem that because a position of the speaker changes with respect to the moving object each time the speaker and the moving object relatively move, a recognition rate decreases if the speaker stands at a position, for which an acoustic model is not prepared in advance.

The present invention, which is created in view of the background described above, provides an automatic speech recognition system which is able to recognize with high accuracy while a speaker and a moving object are moving around.

It is an aspect of the present invention to provide an automatic speech recognition system, which recognizes speeches in acoustic signals detected by a plurality of microphones as character information. The system comprises a sound source localization module, a feature extractor, an acoustic model memory, an acoustic model composition module and a speech recognition module. The sound source localization module localizes a sound direction corresponding to a specified speaker based on the acoustic signals detected by the plurality of microphones. The feature extractor extracts features of speech signals contained in one or more pieces of information detected by the plurality of microphones. The acoustic model memory stores direction-dependent acoustic models that are adjusted to a plurality of directions at intervals. The acoustic model composition module composes an acoustic model adjusted to the sound direction, which is localized by the sound source localization module, based on the direction-dependent acoustic models in the acoustic model memory. The acoustic model composition module also stores the acoustic model in the acoustic model memory. The speech recognition module recognizes the features extracted by the feature extractor as character information using the acoustic model composed by the acoustic model composition module.

In the automatic speech recognition system described above, the sound source localization module localizes a sound direction, the acoustic model composition module composes an acoustic model adjusted to a direction based on the sound direction and direction-dependent acoustic models and the speech recognition module performs speech recognition with the acoustic model.

It may be preferable, but not necessarily, that the automatic speech recognition system includes the sound source separation module which separates the speech signals of the specified speaker from the acoustic signals, and the feature extractor extracts the features of the speech signals based on the speech signals separated by the sound source separation module.

In the automatic speech recognition system described above, the sound source localization module localizes the sound direction and the sound source separation module separates only the speeches corresponding to the sound direction localized by the sound source localization module. The acoustic model composition module composes the acoustic model corresponding to the sound direction based on the sound direction and the direction-dependent acoustic models. The speech recognition module carries out speech recognition with this acoustic model.

In this connection, the speech signals delivered by the sound source separation module are not limited to analogue speech signals, but they may include any type of information as long as it is meaningful in terms of speech, such as digitized signals, coded signals and spectrum data obtained by frequency analysis.

It may be possible that the sound source localization module is configured to execute a process comprising: performing a frequency analysis for the acoustic signals detected by the microphones to extract harmonic relationships; acquiring an intensity difference and a phase difference for the harmonic relationships extracted through the plurality of microphones; acquiring belief factors for a sound direction based on the intensity difference and the phase difference, respectively; and determining a most probable sound direction.

It may be possible that the sound source localization module employs scattering theory that generates a model for an acoustic signal, which scatters on a surface of a member, such as a head of a robot, to which the microphones are attached, according to a sound direction so as to specify the sound direction for the speaker with the intensity difference and the phase difference detected through the plurality of microphones.

It may be preferable, but not necessarily, that the sound source separation module employs an active direction-pass filter so as to separate speeches, the filter being configured to execute a process comprising: separating speeches by a narrower directional band when a sound direction, which is localized by the sound source localization module, lies close to a front, which is defined by an arrangement of the plurality of microphones; and separating speeches by a wider directional band when the sound direction lies apart from the front.

It may be preferable, but not necessarily, that the acoustic model composition module is configured to compose an acoustic model for the sound direction by applying weighted linear summation to the direction-dependent acoustic models in the acoustic model memory and weights introduced into the linear summation are determined by training.

It may be preferable, but not necessarily, that the automatic speech recognition system further comprises a speaker identification module, the acoustic model memory possesses direction-dependent acoustic models for respective speakers, and the acoustic model composition module is configured to execute a process comprising: referring to direction-dependent acoustic models of a speaker who is identified by the speaker identifying module and to a sound direction localized by the sound source localization module; composing an acoustic model for the sound direction based on the direction-dependent acoustic models in the acoustic model memory; and storing the acoustic model in the acoustic model memory.

It may be preferable, but not necessarily, that the automatic speech recognition system further comprises a masking module. The masking module conducts a comparison between patterns prepared in advance with the features extracted by the feature extractor or the speech signals separated by the sound source separation module so as to identify a domain, a frequency domain and sub-band, for example, in which a difference with respect to the patterns is greater than a predetermined threshold. The masking module sends an index indicating that reliability in terms of feature is low for the identified domain to the speech recognition module.

It may be preferably, but not necessarily, that the automatic speech recognition system further comprises a stream tracking module. The stream tracking module stores the sound direction localized by the sound source localization module so as to estimate a direction in which the specified speaker is moving. Also the stream tracking module estimates a current position of the speaker according to the estimated direction. The sound source separation module preferably then determines a sound direction by the current position of the speaker estimated by the stream tracking module.

The automatic speech recognition system described above, which identifies the sound direction of the speech signals generated in an arbitrary direction and carries out speech recognition using the acoustic model appropriate for the sound direction, is able to increase speech recognition rate.

BRIEF DESCRIPTION OF THE DRAWINGS

FIG.1 is a block diagram showing an automatic speech recognition system according to an embodiment of the present invention.
FIG.2 is a block diagram showing an example of a sound source localization module.
FIG.3 is a schematic diagram illustrating operation of a sound source localization module.
FIG.4 is a schematic diagram illustrating operation of a sound source localization module.
FIG.5 is a schematic diagram describing auditory epipolar geometry.
FIG.6 is a graph showing the relationship between phase difference $\Delta\phi$ and frequency $f$.
FIG.7A and FIG. 7B are graphs each showing an example of a head related transfer function.
FIG.8 is a block diagram showing an example of a sound source separation module.
FIG.9 is a graph showing an example of a pass range function.
FIG.10 is a schematic diagram illustrating operation of a subband selector.
FIG.11 is a plan view showing an example of a pass range.
FIG.12A and FIG.12B are block diagrams each showing an example of a feature extractor.
FIG.13 is a block diagram showing an example of an acoustic model composition module.
FIG.14 is a table showing a unit for recognition and a sub-model of a direction-dependent acoustic model.
FIG.15 is a schematic diagram illustrating operation of a parameter composition module.
FIG.16A and FIG.16B are graphs each showing an example of a weight Wn.
FIG.17 is a table showing a training method of a weight W.
FIG.18 is a block diagram showing an automatic speech recognition system according to another embodiment of the present invention.
FIG.19 is a schematic diagram illustrating a difference in input distance of an acoustic signal.
FIG.20 is a block diagram showing an automatic speech recognition system according to another embodiment of the present invention.
FIG.21 is a block diagram showing a stream tracking module.

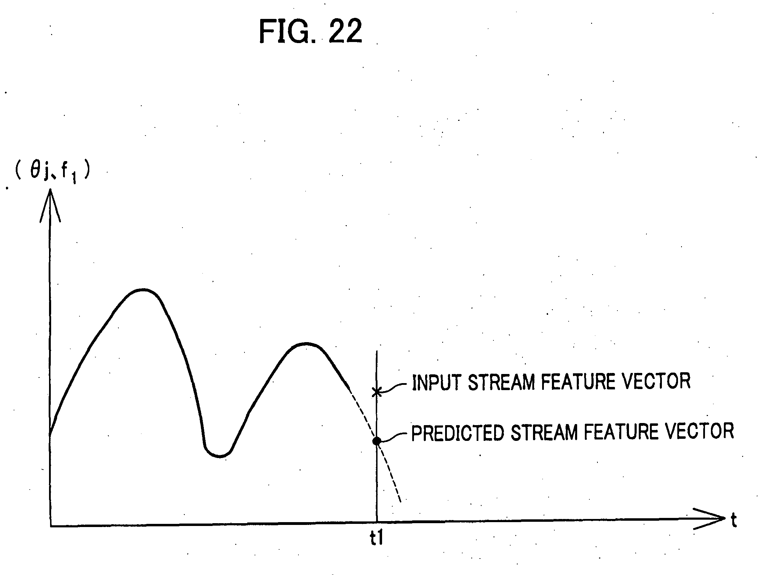

FIG.22 is a graph showing a sound direction history.

DESCRIPTION OF THE PREFERRED EMBODIMENTS

[First Embodiment]

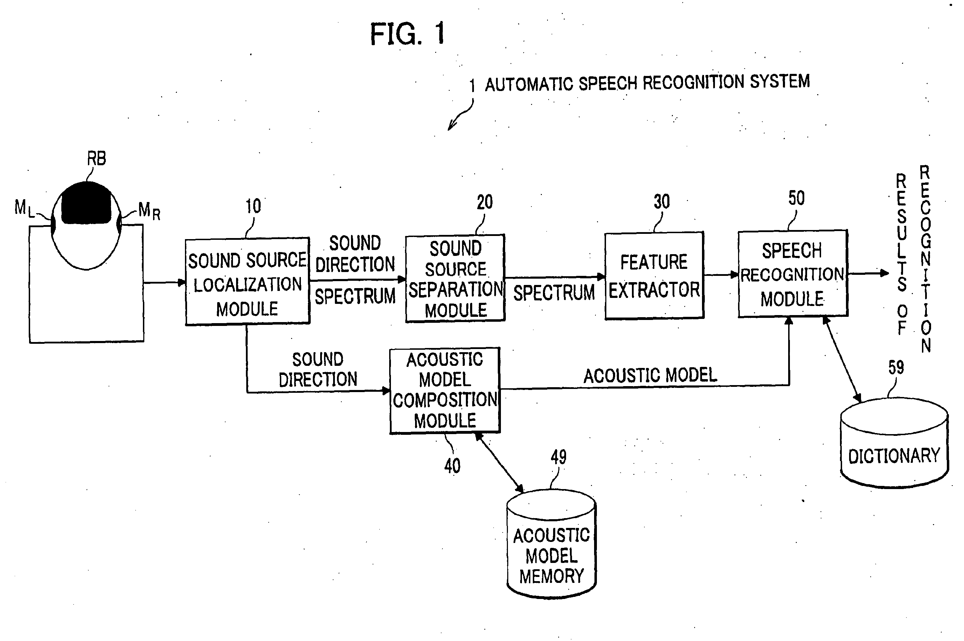

Detailed description is given of an embodiment of the present invention with reference to the appended drawings. FIG.1 is a block diagram showing an automatic speech recognition system according to a first embodiment of the present invention.
As shown in FIG.1, an automatic speech recognition system 1 according to the first embodiment includes two microphones $M_R$ and $M_L$, a sound source localization module 10, a sound source separation module 20, an acoustic model memory 49, an acoustic model composition module 40, a feature extractor 30 and a speech recognition module 50. The module 10 localizes a speaker (sound source) receiving acoustic signals detected by the microphones $M_R$ and $M_L$. The module 20 separates acoustic signals originating from a sound source at a particular direction based on the direction of the sound source localized by the module 10 and spectrums obtained by the module 10. The module 49 stores acoustic models adjusted to a plurality of directions. The module 40 composes an acoustic model adjusted to a sound direction, based on the sound direction which is localized by the module 10 and the acoustic models stored in the module 49. The module 30 extracts features of acoustic signals based on a spectrum of the specified sound source, which is separated by the module 20. The module 50 performs speech recognition based on the acoustic model composed by the module 40 and the features of the acoustic signals extracted by the module 30. Among these modules, the module 20 is not mandatory but adopted as the case may be.
The invention, in which the module 50 performs speech recognition with the acoustic model that is composed and adjusted to the sound direction by the module 40, is able to provide a high recognition rate.
Next, description is given of the microphones $M_R$ and $M_L$, the sound source localization module 10, the sound source separation module 20, the feature extractor 30, the acoustic model composition module 40 and the speech recognition module 50, respectively.

(Microphones $M_R$ and $M_L$)

The microphones $M_R$ and $M_L$ are each a typical type of microphone, which detects sounds and generates electric signals (acoustic signals). The number of microphones is not limited to two as is exemplarily shown in this embodiment, but it is possible to select any number, for example three or four, as long as it is plural. The microphones $M_R$ and $M_L$ are, for example, installed in the ears of a robot RB, a moving object.

A typical front of the automatic speech recognition system 1 in terms of collecting acoustic signals is defined by an arrangement of the microphones $M_R$ and $M_L$. It is mathematically described that a direction resulting from a sum of vectors, each being oriented to a sound collected by one of the microphones $M_R$ and $M_L$, will coincide with the front of the automatic speech recognition system 1. As shown in FIG.1 when the microphones $M_R$ and $M_L$ are installed on left and right sides of a head of the robot RB, a front of the robot RB will coincide with the front of the automatic speech recognition system 1.

(Sound source localization module 10)

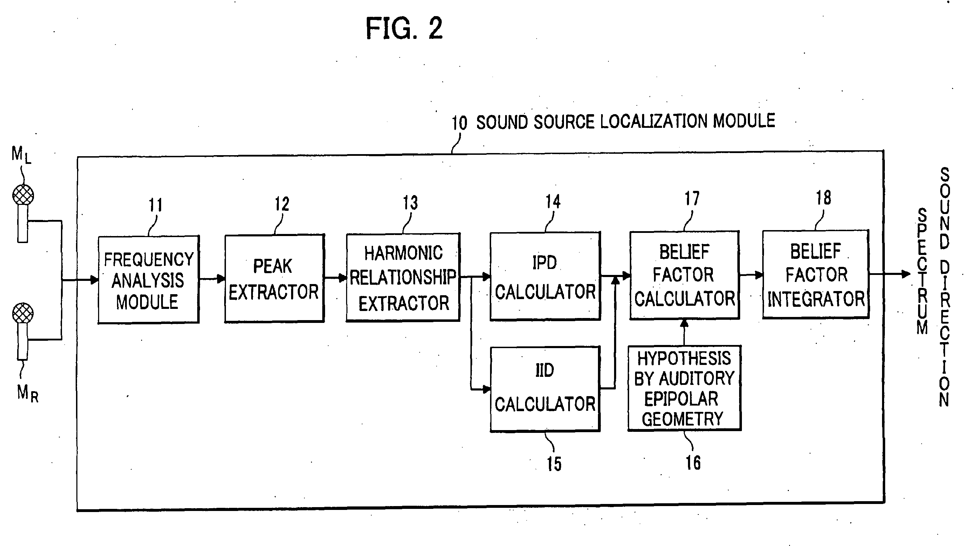

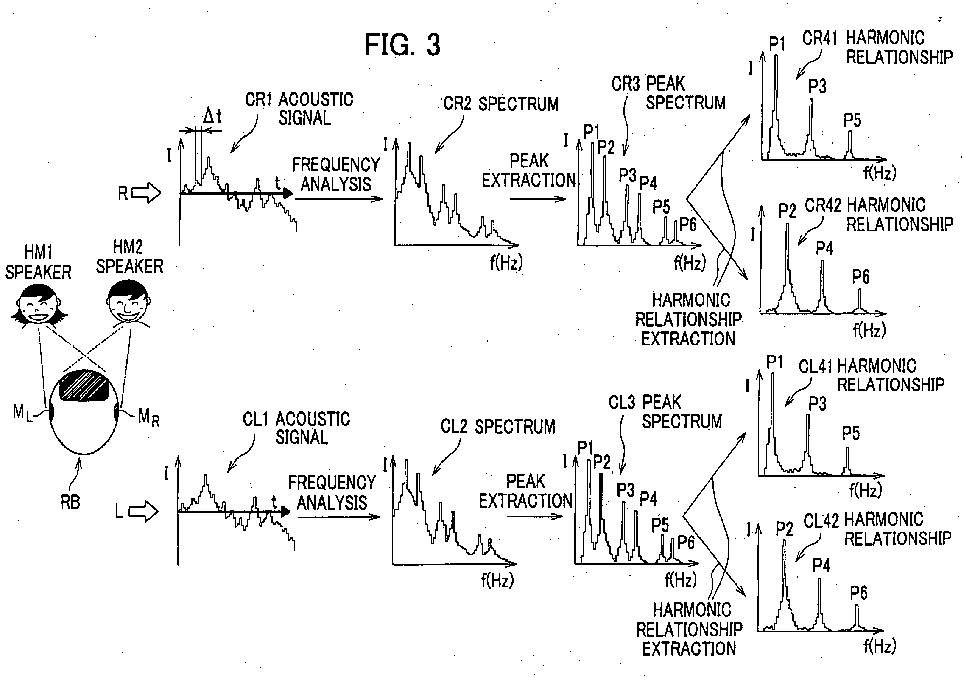

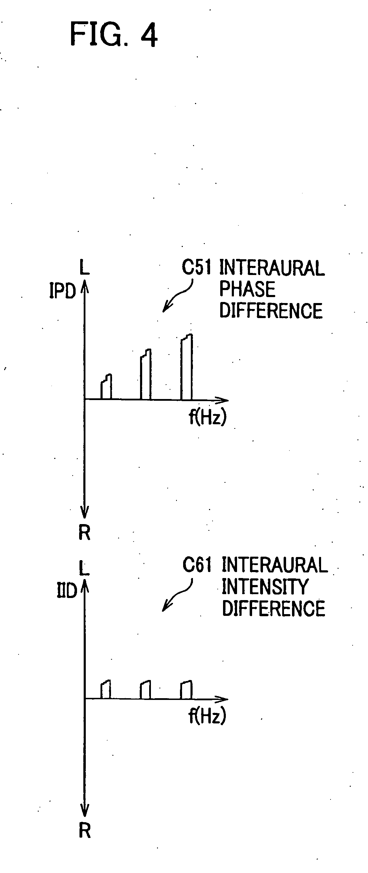

FIG.2 is a block diagram showing an example of a sound source localization module. FIG.3 and FIG.4 are schematic diagrams each describing operation of a sound source localization module.

The sound source localization module 10 localizes a direction of sound source for each of speakers HMj (HM1 and HM2 in FIG.3, for example) based on two kinds of acoustic signals received from the two microphones $M_R$ and $M_L$. There are some methods for localizing a sound source such as: a method for utilizing a phase difference between acoustic signals entering the microphones $M_R$ and $M_L$, a method for estimating with head related transfer function of a robot RB and a method for establishing a correlation between signals entering through the right and left microphones $M_R$ and $M_L$. Each of the methods described above has been improved in various ways so as to increase accuracy. Description is given here of a method as an example, with which the inventers of the present invention have succeeded in attaining improvement.

As shown in FIG.2, the sound source localization module 10 includes a frequency analysis module 11, a peak extractor 12, a harmonic relationship extractor 13, an IPD calculator 14, an IID calculator 15, a hypothesis 16 by auditory epipolar geometry, a belief factor calculator 17 and a belief factor integrator 18.

Each of these portions will be described with reference to FIG.3 and FIG.4. A situation where the speakers HM1 and HM2 simultaneously start speaking to the robot RB is assumed in the following description.

(Frequency analysis module 11)

The frequency analysis module 11 cuts out a signal section having a microscopic time length $\Delta t$ from right and left acoustic signals CR1 and CL1, which are detected by the right and left microphones $M_R$ and $M_L$ installed in the robot RB, performing a frequency analysis for each of left and right channels with Fast Fourier Transform (FFT).

Results obtained from the acoustic signals CR1, which are received from the right microphone $M_R$, are designated as a spectrum CR2. Similarly, results obtained from the acoustic signals CL1, which are received from the left microphone $M_L$, are designated as a spectrum CL2.

It may be alternatively possible to adopt other methods for frequency analysis, such as a band pass filter:

(Peak extractor 12)

The peak extractor 12 extracts consecutive peaks from the spectrums CR2 and CL2 for the right and left channels, respectively. One method is to directly extract local peaks of a spectrum. The other one is to use a method based on spectral subtraction method (See S. F. Boll, A spectral subtraction algorithm for suppression of acoustic noise in speech, Proceedings of 1979 International conference on Acoustics, Speech, and signal Processing (ICASSP-79)). The latter method extracts peaks from a spectrum and subtracts the extracted peaks from the spectrum, generating a residual spectrum. A process for extracting peaks will be repeated until no peaks are found in the residual spectrum.

When extraction of peaks is carried out for the spectrums CR2 and CL2, only sub-band signals forming peaks such as peak spectrums CR3 and CL3 are extracted.

(Harmonic relationship extractor 13)

The harmonic relationship extractor 13 generates a group, which contains peaks having a particular harmonic relationship, for each of the right and left channels, according to harmonic relationship which a sound source possesses. Taking a human voice, for example, a voice of a specified person is composed of sounds having fundamental frequencies and their harmonics. Because fundamental frequencies slightly differ from person to person, it is possible to categorize voices of a plurality of persons into groups according to difference in the frequencies. The peaks, which are categorized into a group according to harmonic relationship, can be estimated as signals generated by a common sound source. If a plural number (J) of speakers is simultaneously speaking, for example, the same plural number (J) of harmonic relationships is extracted.

In FIG.3, peaks P1, P3 and P5 of the peak spectrum CR3 are categorized into one group of harmonic relationship CR41. Peaks P2, P4 and P6 of the peak spectrum CR3 are categorized into one group of harmonic relationship CR42. Similarly, peaks P1, P3 and P5 of the peak spectrum CL3 are categorized into one group of harmonic relationship CL41. Peaks P2, P4 and P6 of the peak spectrum CL3 are also categorized into one group of harmonic relationship CL42.

(IPD calculator 14)

The IPD calculator 14 calculates an interaural phase difference (IPD) from spectrums of the harmonic relationships CR41, CR42, CL41 and CL42.

Let us suppose that a set of peak frequencies included in a harmonic relationship (the harmonic relationship CR41, for example) corresponding to a speaker HMj is $\{f_k | k = 0...K - 1\}$. The IPD calculator 14 selects a spectral subband corresponding to each $f_k$ from both right and left channels (harmonic relationships CR41 and CL41, for example), calculating $IPD\Delta\phi(f_k)$ with an equation (1). The $IPD\Delta\phi(f_k)$ calculated from the harmonic relationships CR41 and CL41 results in an interaural phase difference C51, as shown in FIG.4. Where $\Delta\phi(f_k)$ is an IPD for a harmonic component $f_k$ lying in a harmonic relationship and K represents number of harmonics lying in this harmonic relationship.

$$\Delta\phi(f_k) = \arctan\left(\frac{\Im[S_r(f_k)]}{\Re[S_r(f_k)]}\right) - \arctan\left(\frac{\Im[S_l(f_k)]}{\Re[S_l(f_k)]}\right) \qquad (1)$$

where:

$\Delta\phi(f_k)$    : IPD (interaural phase difference) for $f_k$

$\Im[S_r(f_k)]$    : an imaginary part of spectrum for a peak $f_k$ of right input signal

$\Re[S_r(f_k)]$    : a real part of spectrum for a peak $f_k$ of right input signal

$\Im[S_l(f_k)]$    : an imaginary part of spectrum for a peak $f_k$ of left input signal

$\Re[S_l(f_k)]$    : a real part of spectrum for a peak $f_k$ of left input signal

(IID calculator 15)

The IID calculator 15 calculates a difference in sound pressure between sounds received from the right and left microphones $M_R$ and $M_L$ (interaural intensity difference) for a harmonic belonging to a harmonic relationship.

The IID calculator 15 selects a spectral subband, which corresponds to a harmonic having a peak frequency $f_k$ lying in a harmonic relationship of a speaker HMj (harmonic relationships CR41 and CL41, for example), from both right and left channels (harmonic relationships CR41 and CL41, for example), calculating an $IID\Delta\rho(f_k)$ with an equation (2). The $IID\Delta\rho(f_k)$ calculated from the harmonic relationships CR41 and CL41 results in an interaural intensity difference C61 as shown in FIG.4, for example.

$$\Delta\rho(f_k) = p_r(f_k) - p_l(f_k) \qquad (2)$$

where:

$\Delta\rho(f_k)$    : IID (interaural intensity difference) for $f_k$
$p_r(f_k)$    : power for peak $f_k$ of a right input signal
$p_l(f_k)$    : power for peak $f_k$ of a left input signal

$$p_r(f_k) = 10\log_{10}(\Im[S_r(f_k)]^2 + \Re[S_r(f_k)]^2)$$

$$p_l(f_k) = 10\log_{10}(\Im[S_l(f_k)]^2 + \Re[S_l(f_k)]^2)$$

(Hypothesis 16 by auditory epipolar geometry)

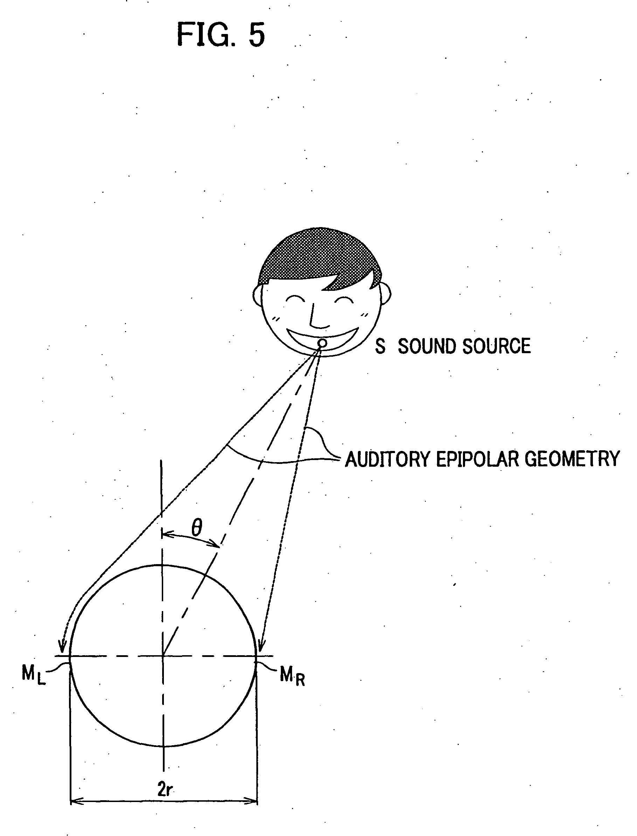

Let's see FIG.5, in which a head portion of the robot RB, which is modeled by a sphere, is viewed from upward. The hypothesis 16 by auditory epipolar geometry represents data of phase difference, which is estimated based on a time difference resulting from a difference in distance with respect to a sound source S between the microphones $M_R$ and $M_L$, which are installed in both ears of the robot RB.

According to auditory epipolar geometry, a phase difference $\Delta\phi$ is obtained with an equation (3). It is assumed here that the sphere is representative of the shape of the head.

$$\Delta\phi = \frac{2\pi f}{v} \times r(\theta + \sin\theta) \qquad (3)$$

where $\Delta\phi$ represents an interaural intensity phase difference (IPD), $v$ sound velocity, $f$ a frequency, $r$ is a value depending from an interaural distance 2r and $\theta$ represents a direction of a sound source.

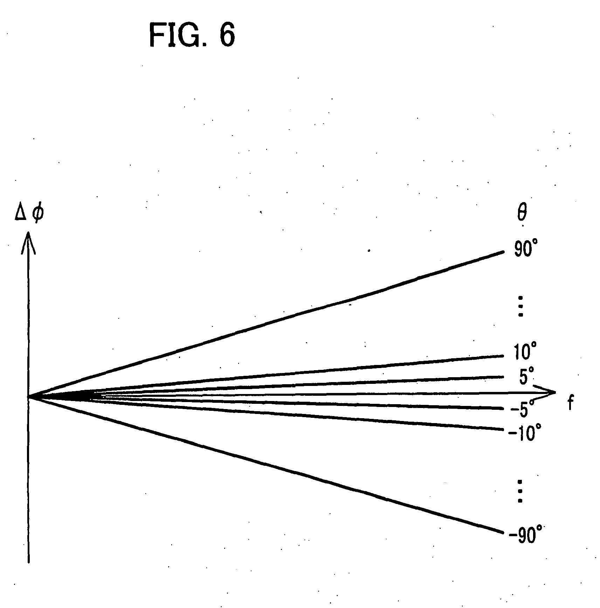

The relationship between a phase difference $\Delta\phi$ and a frequency $f$ of acoustic signals, which come from a direction of a sound source, is obtained with the equation (3) and shown in FIG.6.

(Belief factor calculator 17)

The belief factor calculator 17 calculates a belief factor for IPD and IID, respectively.

Description is first given of "IPD belief factor". An IPD belief factor is obtained as a function of $\theta$ so as to indicate which direction a harmonic component $f_k$ is likely to come from, which is included in a harmonic relationship (harmonic relationship CR41 or CL41, for example) corresponding to a speaker HMj. The IPD is fitted into a probability function.

First, a hypothetical IPD (estimated value) for $f_k$ is calculated with an equation (4).

$$\Delta\phi_h(\theta, f_k) = \frac{2\pi f_k}{v} \times r(\theta + \sin\theta) \qquad (4)$$

$\Delta\phi_h(\theta, f_k)$ represents a hypothetical IPD (estimated value) with respect to a sound source lying in a direction $\theta$ for a $k_{th}$ harmonic component $f_k$. Thirty-seven hypothetical IPD's are, for example, calculated while a direction $\theta$ of a sound source is varied over a range of $\pm 90°$ at intervals of $5°$. It may be alternatively possible to calculate at finer or rougher angle intervals.

Next, a difference between $\Delta\phi_h(\theta, f_k)$ and $\Delta\phi(f_k)$ is calculated with an equation (5) and a summation is obtained for all the peak frequencies $f_k$. This difference, which represents a distance between a hypothesis and an input, tends to take a smaller value if $\theta$ lies closer to a direction of a speaker but a larger value if $\theta$ lies remoter from the direction of the speaker.

$$d(\theta) = \frac{1}{K}\sum_{k=0}^{K-1}\frac{(\Delta\phi_h(\theta, f_k) - \Delta\phi(f_k))^2}{f_k} \qquad (5)$$

A belief factor $B_{IPD}(\theta)$ is obtained by entering the resulting $d(\theta)$ in a probability function, the following equation (6).

$$B_{IPD}(\theta) = \int_{-\infty}^{X(\theta)} \frac{1}{\sqrt{2\pi}} \exp\left(-\frac{x^2}{2}\right) dx \qquad (6)$$

where $X(\theta) = (d(\theta) - m)/\sqrt{s/n}$, $m$ is a mean of $d(\theta)$, $s$ is a variance of $d(\theta)$ and $n$ is a number of hypothetical IPD's (37 in this embodiment).

Description is given of "IID belief factor". An IID belief factor is obtained in the following manner. A summation of intensity differences included in a harmonic relationship corresponding to a speaker HMj is calculated with an equation (7).

$$S = \sum_{k=0}^{K-1} \Delta\rho(f_k) \qquad (7)$$

where K represents number of harmonics included in a harmonic relationship, $\Delta\rho(f_k)$ is an IID calculated by the IID calculator 15.

Introducing Table 1, a likelihood to be right, center or left associated with a sound direction is transformed into a belief factor. In this connection, Table 1 shows empirical values.

When a hypothetical sound direction $\theta$ is equal to 40˚ and an intensity difference S has a positive sign, for example, a belief factor $B_{IID}(\theta)$ is regarded as 0.35 according to the left-upper box of Table 1.

Table 1

| θ | | 90˚ ~ 30˚ | 30˚ ~ -30˚ | -30˚ ~ -90˚ |
|---|---|---|---|---|
| S | + | 0.35 | 0.5 | 0.65 |
| | - | 0.65 | 0.5 | 0.35 |

(Belief factor integrator 18)

The belief factor integrator 18 integrates an IPD belief factor $B_{IPD}(\theta)$ and an IID belief factor $B_{IID}(\theta)$ based on Dempster - Shafer theory with an equation (8), calculating an integrated belief factor $B_{IPD+IID}(\theta)$. A $\theta$ which provides a largest $B_{IPD+IID}(\theta)$ is considered to coincide with a direction of a speaker HMj, so that it is denoted as $\theta_{HM_j}$ in the description below.

$$B_{IPD+IID}(\theta) = 1 - (1 - B_{IPD}(\theta))(1 - B_{IID}(\theta)) \qquad (8)$$

It may be alternatively possible to use a hypothesis by head related transfer function or a hypothesis by scattering theory instead of the hypothesis by auditory epipolar geometry.

(Hypothesis by head related transfer function)

A hypothesis by head related transfer function is a phase difference and an intensity difference for sounds detected by microphones $M_R$ and $M_L$, which are obtained from impulses generated in a surrounding environment of a robot.

The hypothesis by head related transfer function is obtained in the following manner. The microphones $M_R$ and $M_L$ detect impulses, which are sent at appropriate intervals (5˚, for example) over a range of -90˚ to 90˚. A frequency analysis is conducted for each impulse so as to obtain a phase response and a magnitude response with respect to frequencies $f$. A difference between phase responses and a difference between magnitude responses are calculated to provide a hypothesis by head related transfer function.

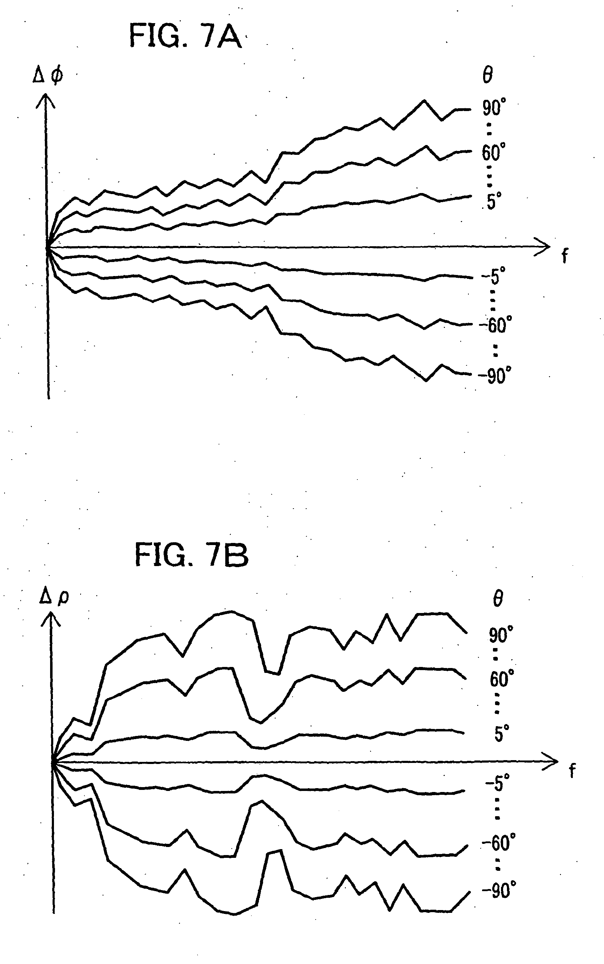

The hypothesis by head related transfer function, which is calculated as described above, results in IPD shown in FIG.7A and IID shown in FIG.7B.

When a head related transfer function is introduced, it is possible to obtain a relationship between IID and a frequency of a sound coming from a certain direction in addition to IPD. Therefore, a belief factor is calculated based on distance data $d(\theta)$, which has been generated for both IPD and IID. The method for generating hypothesis is the same for IPD and IID.

Different from the method for generating a hypothesis with auditory epipolar geometry, a hypothesis by head related transfer function establishes a relationship between frequency $f$ and IPD for a signal, which is generated in each sound direction, by means of measurement in lieu of calculation. A $d(\theta)$, which is a distance between a hypothesis and an input, is directly calculated from actual measurement values shown in FIGS.7A and 7B, respectively. (Hypothesis by scattering theory)

Scattering theory estimates both IPD and IID, taking into account waves scattered by an object, which scatters sounds, a head of a robot, for example. It is assumed here that a head of a robot is an object which has a main effect on the input of a microphone and the head is a sphere having a radius "a". It is also assumed that coordinates representative of the center of the head are an origin of a polar coordinate.

When $r_0$ is a position of a point sound source and $r$ is an observation point, a potential due to a direct sound at the observation point is defined by an equation (9).

$$V^i = \frac{v}{2\pi R f} e^{i\frac{2\pi R f}{v}} \qquad (9)$$

where:

$f$ : frequency of point sound source
$v$ : sound velocity
$R$ : distance between a point sound source and an observation point

As shown in "J. J. Bowman, T.B.A. Senior, and P.L.E. Uslenghi: Electromagnetic and Acoustic Scattering by simple shapes, Hemisphere Publishing Co., 1987" and the like, a potential due to direct and scattering sounds is defined by an equation (10) while the observation point $r$ lies on a surface of the head.

$$S(\theta, f) = V^i + V^s$$

$$= -\left(\frac{v}{2\pi a f}\right)^2 \sum_{n=0}^{\infty} (2n+1) P_n(\cos\theta) \frac{h_n^{(1)}\left(\frac{2\pi r_0}{v}f\right)}{h_n^{(1)\prime}\left(\frac{2\pi a}{v}f\right)} \qquad (10)$$

where
$V_s$: potential due to scattering sound
$P_n$: Legendre Function of the First Kind

$h_n^{(1)}$ : Hunkel Function of the First Kind

When polar coordinates for $M_R$ and $M_L$ are $(a,\pi/2,0)$ and $(a,-\pi/2,0)$, respectively, potentials at these microphones are represented by equations (11) and (12), respectively.

$$S_L(\theta, f) = S(\frac{\pi}{2} - \theta, f) \qquad (11)$$

$$S_R(\theta, f) = S(-\frac{\pi}{2} - \theta, f) \qquad (12)$$

In this way, a phase difference $IPD\Delta\phi_s(\theta,f)$ and an intensity difference $IID\Delta\rho_s(\theta,f)$ are calculated by the following equations (13) and (14), respectively.

$$\Delta\phi_s(\theta,f) = \arg(S_L(\theta,f)) - \arg(S_R(\theta,f)) \qquad (13)$$

$$\Delta\rho_s(\theta,f) = 20\log_{10}\frac{|S_L(\theta,f)|}{|S_R(\theta,f)|} \qquad (14)$$

Replacing $\Delta\phi(\theta,f_k)$ of the equation (4) with $IPD\Delta\phi(\theta,f)$, a $B_{IPD}(\theta)$ is calculated in the same process as that for auditory epipolar geometry.

Namely, a difference between $\Delta\phi_s(\theta,f_k)$ and $\Delta\phi(f_k)$ is calculated and a sum $d(\theta)$ for all peaks $f_k$ is then calculated, which is incorporated into the probability density function shown in equation (6) so as to obtain a belief factor $B_{IPD}(\theta)$.

As for IID, $d(\theta)$ and $B_{IID}(\theta)$ are calculated in the similar method to that applied to IPD. More specifically speaking, in addition to replacing $\Delta\phi$ with $\Delta\rho$, $\Delta\phi_h(\theta,f_k)$ in the equation (4) is replaced with $IID\Delta\rho_s(\theta,f_k)$ in the equation (14). Then, a difference between $\Delta\rho_s(\theta,f_k)$ and $\Delta\rho(f_k)$ is calculated and a sum $d(\theta)$ for all peaks $f_k$ is then calculated, which is incorporated into the probability density function shown in equation (6) so as to obtain a belief factor $B_{IID}(\theta)$.

If a sound direction is estimated based on the scattering theory, it is possible to generate a model representing a relationship between a sound direction and a phase difference as well as between a sound direction and an intensity difference, taking into account speeches scattering along the surface of a head of robot, for example an effect by a sound traveling round a rear side of the head. This leads to an increase in accuracy for estimation of a sound direction. When a sound source lies sideways with respect to the head, it is particularly possible to increase the accuracy for estimation of a sound direction by introducing the scattering theory, because the power of a sound reaching to a microphone is relatively great, which lies in an opposite direction of the sound source.

(Sound source separation module 20)

The sound source separation module 20 separates acoustic (speech) signals for a speaker HMj according to information on a localized sound direction and a spectrum (spectrum CR2, for example) provided by the sound source localization module 10. Though there may be conventional methods applicable to separation of a sound source, beam forming, null forming, peak tracking, a directional microphone, Independent Component analysis (ICA) and the like, for example, description here is given of a method with an active direction-pass filter developed by the inventers of the present invention.

As a sound direction lies remoter from the front of a robot RB, it tends to be more difficult to expect accuracy for information on the sound direction, which is estimated through two microphones, in separating a sound source. In order to solve this problem, this embodiment employs active control so that a pass range is narrower for a sound source lying in the front direction but wider for a sound source lying remote from the front direction, thereby increasing accuracy for separating a sound source.

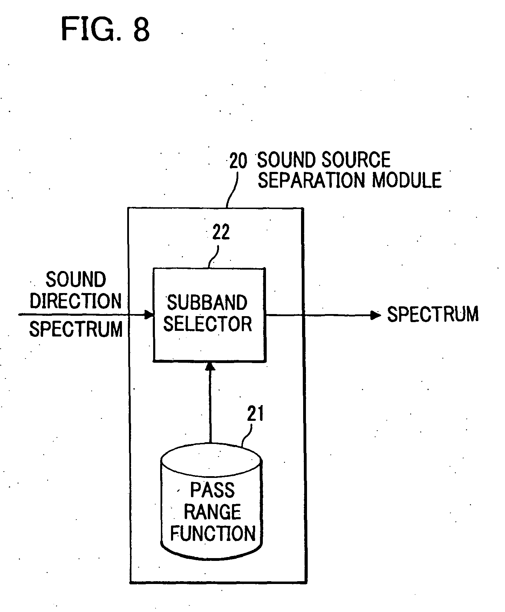

More specifically speaking, the sound source separation module 20 includes a pass range function 21 and a subband selector 22, as shown in FIG.8.

(Pass range function 21)

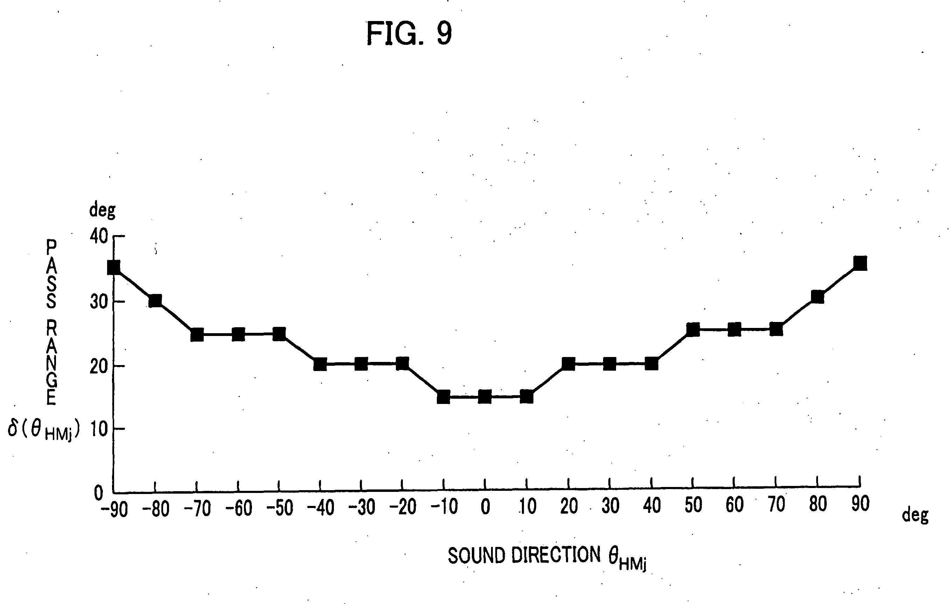

As shown in FIG.9, the pass range function 21 is a function of a sound direction and a pass range, which is in advance adjusted to have a greater pass range as a sound direction lies remoter from the front. The reason for this is that it is more difficult to expect accuracy for information on a sound direction as it lies remoter from the front (0˚).

(Subband selector 22)

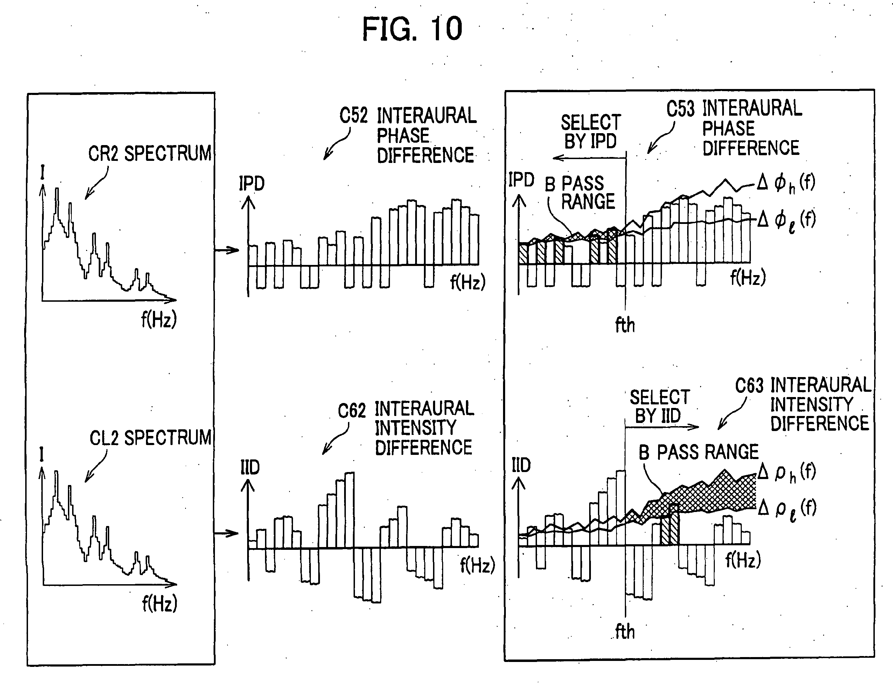

The subband selector 22 selects a sub-band, which is estimated to come from a particular direction, out of respective frequencies (called "sub-band") of each of the spectrums CR2 and CL2. As shown in FIG.10, the subband selector 22 calculates $IPD\Delta\phi(f_i)$ and $IID\Delta\rho(f_i)$ (see an interaural phase difference C52 and an interaural intensity difference C62 in FIG.10) for sub-bands of a spectrum according to the equations (1) and (2), based on the right and left spectrums CR2 and CL2, which are generated by the sound source localization module 10.

Determining a $\theta_{HMj}$, which is obtained by the sound source localization module 10, to be a sound direction which should be retracted, the subband selector 22 refers to the pass range function 21 so as to obtain a pass range $\delta$ $(\theta_{HMj})$ corresponding to the $\theta_{HMj}$. The subband selector 22 calculates a maximum $\theta_h$ and a minimum $\theta_l$ according to the obtained pass range $\delta(\theta_{HMj})$ with the following equation (15).

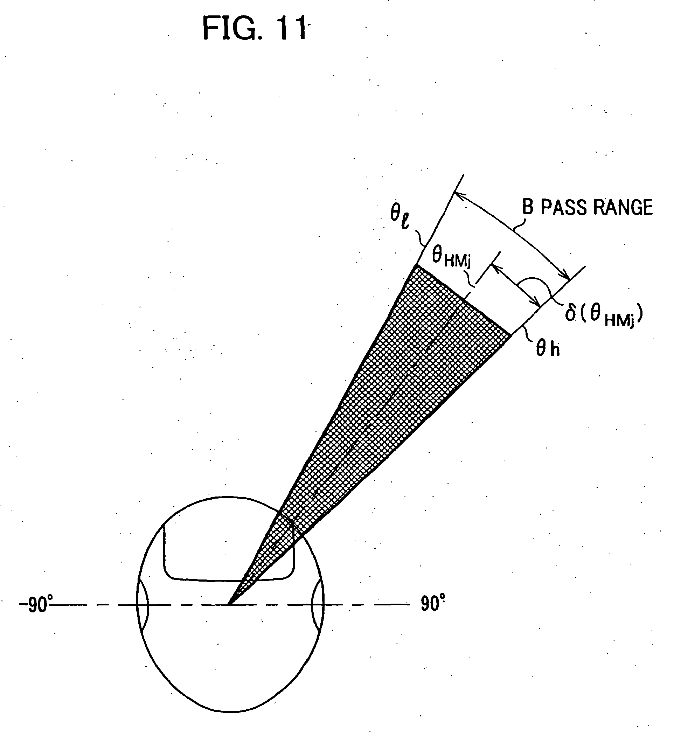

A pass range B is shown in FIG.11 in the form of a plan view, for example.

$$\theta_l \doteqdot \theta_{HMj} - \delta(\theta_{HMj})$$
$$\theta_h = \theta_{HMj} + \delta(\theta_{HMj}) \qquad (15)$$

Next, estimation is conducted for IPD and IID corresponding to $\theta_l$ and $\theta_h$. This estimation is carried out with a transfer function, which is prepared in advance by measurement or calculation. The transfer function is a function which correlates a frequency and IPD as well as a frequency and IID, respectively, with respect to a signal coming from a sound direction $\theta$. As described above, epipolar geometry, a head related transfer function or scattering theory is applied to the transfer function. An estimated IPD is, for example, shown in FIG.10 as $\Delta\phi_l(f)$ and $\Delta\phi_h(f)$ in an interaural phase difference C53, and an estimated IID is, for example, shown in FIG.10 as $\Delta\rho_l(f)$ and $\Delta\rho_h(f)$ in an interaural intensity difference C63.

Utilizing a transfer function of a robot RB, the subband selector 22 selects a sub-band for a sound direction $\theta_{HMj}$ according to a frequency $f_i$ of the spectrum CR2 or CL2. The subband selector 22 selects a sub-band based on IPD if the frequency $f_i$ is lower than a threshold frequency $f_{th}$, or based on IID if the frequency $f_i$ is higher than the threshold frequency $f_{th}$. The subband selector 22 selects a sub-band which satisfies a conditional equation (16).

$$f_i < f_{th} : \Delta\phi_l(f_i) \le \Delta\phi(f_i) \le \Delta\phi_h(f_i)$$
$$f_i \ge f_{th} : \Delta\rho_l(f_i) \le \Delta\rho(f_i) \le \Delta\rho_h(f_i) \qquad (16)$$

where $f_{th}$ represents a threshold frequency, based on which one of IPD and IID is selected as a criterion for filtering.

According to this conditional equation, a subband of frequency $f_i$ (an area with diagonal lines), in which IPD lies between $\Delta\phi_l(f)$ and $\Delta\phi_h(f)$, is selected for frequencies lower than the threshold frequency $f_{th}$ in the interaural phase difference C53 shown in FIG.10. In contrast, a subband (an area with diagonal lines), in which IID lies between $\Delta\rho_l(f)$ and $\Delta\rho_h(f)$, is selected for frequencies higher than the threshold frequency $f_{th}$ in the interaural intensity difference C63 shown in FIG.10. A spectrum containing selected sub-bands in this way is referred to as "extracted spectrum" in this specification.

There is an alternative method, which introduces a directional microphone for separating a sound source, instead of the sound source separation module 20 according to this embodiment described above. More specifically speaking, a microphone with narrow directivity is installed on a robot RB. If the face of the robot is so controlled that the directional microphone is turned to a sound direction $\theta_{HMj}$ acquired by the sound source localization module 10, it is possible to collect only speeches coming from this direction.

If there is only a single directional microphone, a problem may arise that collection of speeches is limited to a single person. However, it may be possible to allow simultaneous collection of speeches of a plurality of people if a plurality of directional microphones is arranged at regular intervals of a certain angle so that it is possible to selectively use speech signals sent by each directional microphone arranged for a sound direction.

(Feature extractor 30)

The feature extractor 30 extracts features necessary for speech recognition from a speech spectrum, which is separated by the sound source separation module 20, or an unseparated spectrum CR2 (or CL2). These spectrums are each referred to as "spectrum for recognition" when they are used for speech recognition. It is possible to use a linear spectrum as features of speech, Mel frequency spectrum or Mel-Frequency Cepstrum Coefficient (MFCC), which results from frequency analysis. In this embodiment, description is given of an example with MFCC. In this connection, when a linear spectrum is adopted, the feature extractor 30 does not carry out any process. In the case of Mel frequency spectrum a cosine transformation (to be described later) is not carried out.

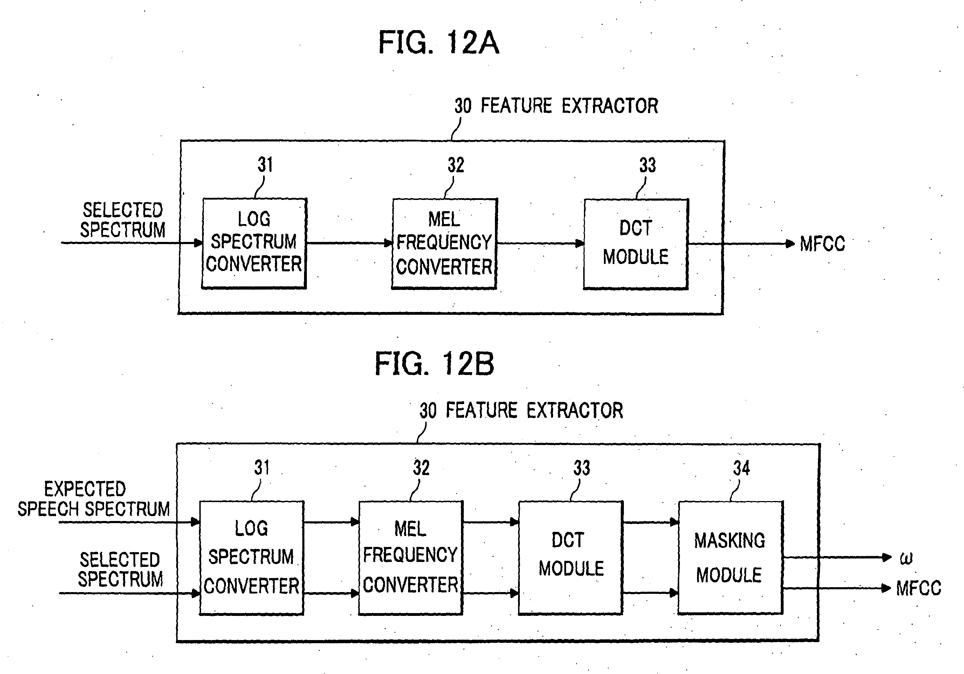

As shown in FIG.12A, the feature extractor 30 includes a log spectrum converter 31, a Mel frequency converter 32 and a discrete cosine transformation (DCT) module 33.

The log spectrum converter 31 converts an amplitude of spectrum for speech recognition, which is selected by the subband selector 22 (see FIG.8), into a logarithm, providing a log spectrum.

The Mel frequency converter 32 makes the log spectrum generated by the log spectrum converter 31 pass through a bandpass filter of Mel frequency, providing a Mel frequency spectrum, whose frequency is converted to Mel scale.

The DCT module 33 carries out a cosine transformation for the Mel frequency spectrum generated by the Mel frequency converter 32. A coefficient obtained by this cosine transformation results in MFCC.

It may be possible to add a masking module 34, which gives an index (0 to 1), within or after the feature extractor 30 as shown in FIG.12B so that a spectrum subband is not considered to have reliable features when an input speech is deformed due to noise.

Description in detail is given of an example shown in FIG.12B. When a feature extractor 30 includes a masking module 34, a dictionary 59 possesses a time series spectrum corresponding to a word. Here, this time series spectrum is referred to as "word speech spectrum".

A word speech spectrum is acquired by a frequency analysis carried out for speeches resulting from a word uttered under a noise-free environment. When a spectrum for recognition is entered into the feature extractor 30, a word speech spectrum for a word, which is estimated to exist in an input speech, is sorted out as an estimated speech spectrum from a dictionary. A criterion applied to the estimation here is that a speech spectrum having the most close time span as that of a spectrum for recognition is regarded as an expected speech spectrum. Undergoing the log spectrum converter 31, the Mel frequency converter 32 and the DCT module 33, the spectrum for recognition and the expected speech spectrum are each transformed into MFCCs. In the following descriptions, MFCCs of spectrum for recognition is referred to as "MFCCs for recognition" and MFCCs of expected speech spectrum as "expected MFCC".

The masking module 34 calculates a difference between MFCCs for recognition and expected MFCCs, assigning zero to an MFCC, if the difference is greater than a threshold estimated beforehand but one if it is smaller than the threshold. The masking module 34 sends the value as an index $\omega$ in addition to MFCCs for recognition to a speech recognition module 50.

It may be possible to sort out one or more expected speech spectrums. It may be alternatively possible to adopt all word speech spectrums without sorting out. In this case, the masking module 34 assigns indexes $\omega$ to all expected speech spectrums, sending them to the speech recognition module 50.

When a directional microphone is used for sound source separation, an ordinary method of frequency analysis, such as an FFT and bandpass filter, is applied to a separated speech so as to obtain a spectrum.

(Acoustic model composition module 40)

The acoustic model composition module 40 composes an acoustic model adjusted to a localized sound direction based on direction-dependent acoustic models, which are stored in the acoustic model memory 49.

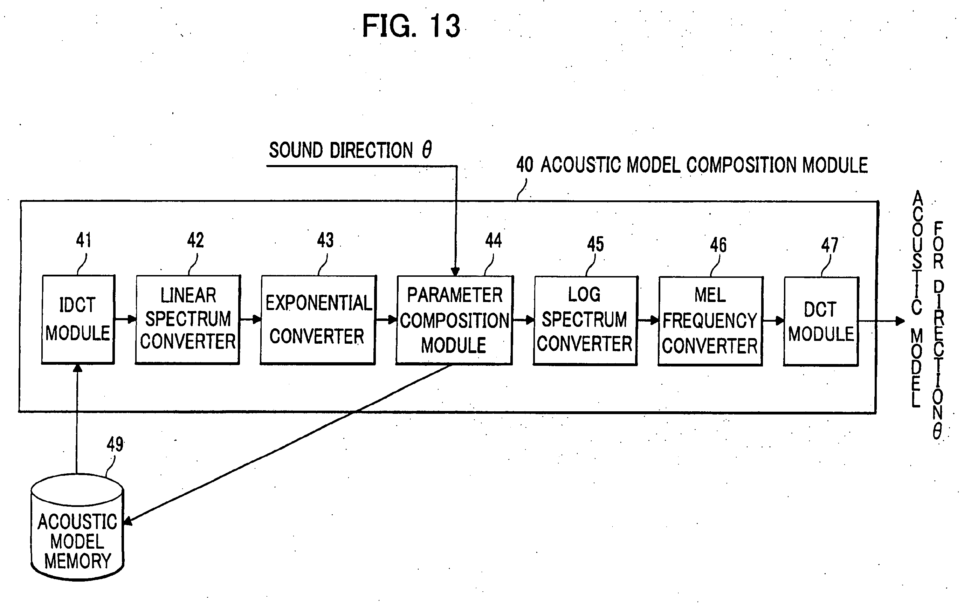

As shown in FIG.13, the acoustic model composition module 40, which has an inverse discrete cosine transformation (IDCT) module 41, a linear spectrum converter 42, an exponential converter 43, a parameter composition module 44, a log spectrum converter 45, a Mel frequency converter 46 and a discrete cosine transformation (DCT) module 47, composes an acoustic model for a direction $\theta$ by referring to direction-dependent acoustic models $H(\theta_n)$, which are stored in the acoustic model memory 49.

(Acoustic model memory 49)

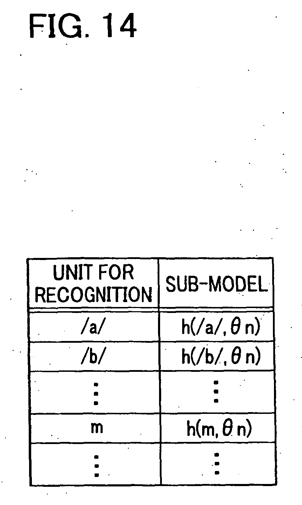

Direction dependent acoustic models $H(\theta_n)$, which are adjusted to respective directions $\theta_n$ with respect to the front of a robot RB, are stored in the acoustic model memory 49. A direction-dependent acoustic model $H(\theta_n)$ is trained on speech of a person uttered from a particular direction $\theta_n$ by way of Hidden Markov Model (HMM). As shown in FIG. 14, a direction-dependent acoustic model $H(\theta_n)$ employs a phoneme as a unit for recognition, storing a corresponding sub-model $h(m,\theta_n)$ for the phoneme. In this connection, it may be possible that other units for recognition such as monophone, PTM, biphone, triphone and the like are adopted for generating a sub-model.

If there are seven sub-models at regular intervals of 30˚ over a range -90˚ to 90˚ in terms of direction $\theta_n$ and each sub-model is composed of 40 pieces of monophone, the number of sub-models $h(m,\theta_n)$ results in $7 \times 40 = 280$.

A sub-model $h(m,\theta_n)$ has parameters such as number of states, a probability density distribution for each state and state transition probability. In this embodiment, the number of states for a phoneme is fixed to three: front (state 1), middle (state 2) and rear (state 3). Although a normal distribution is adopted in this embodiment, it may be alternatively possible to select a mixture model made of one or more other distributions in addition to a normal distribution for the probability density distribution. In this way, the acoustic model memory 49 according to this embodiment is trained on a state transition probability P and parameters of a normal distribution, namely a mean $\mu$ and a standard deviation $\sigma$.

Description is given of steps for generating training data for a sub-model $h(m,\theta_n)$.

Speech signals, which include particular phonemes, are applied to a robot RB by a speaker (not shown) in a direction, for which an acoustic model is intended to generate. The feature extractor 30 converts the detected acoustic signals to MFCC, which the speech recognition module 50 to be described later recognizes. In this way, a probability for a recognized speech signal is obtained for each phoneme. An acoustic model undergoes adaptive training, while a teaching signal indicative of a particular phoneme corresponding to a particular direction is given to the resulting probability. The acoustic model undergoes further training with phonemes and words of sufficient kinds (different speakers, for example) to learn a sub-model.

When a speech for training is given, it may be possible to give another speech as noise in a direction different from that, in which generation of an acoustic model is intended. In this case, the speech separation module 20 separates only a speech, which lies in a direction intended for generating an acoustic model, and then the feature retractor 30 converts the speech to MFCCs. In addition, if an acoustic model is intended for unspecified speakers, it may be possible for the acoustic model to be trained on their voices. In contrast, if an acoustic model is intended for specified speakers individually, it may be possible for the acoustic model to lean with each speaker.

The IDCT module 41 to the exponential converter 43 restore an MFCC of probability density distribution to a linear spectrum. They carry out a reverse operation for a probability density distribution in contrast to the feature extractor 30.

(IDCT module 41)

The IDCT module 41 carries out inverse discrete cosine transformation for MFCC, which is possessed by a direction-dependent acoustic model $H(\theta_n)$ stored in the acoustic model memory 49, generating a Mel frequency spectrum.

(Linear spectrum converter 42)

The linear spectrum converter 42 converts frequencies of the Mel frequency spectrum, which is generated by the IDCT module 41, to linear frequencies, generating a log spectrum.

(Exponential converter 43)

The exponential converter 43 carries out an exponential conversion for the intensity of the log spectrum, which is generated by the linear spectrum converter 42, so as to generate a linear spectrum. The linear spectrum is obtained in the form of a probability density distribution of a mean $\mu$ and a standard deviation $\sigma$.

(Parameter composition module 44)

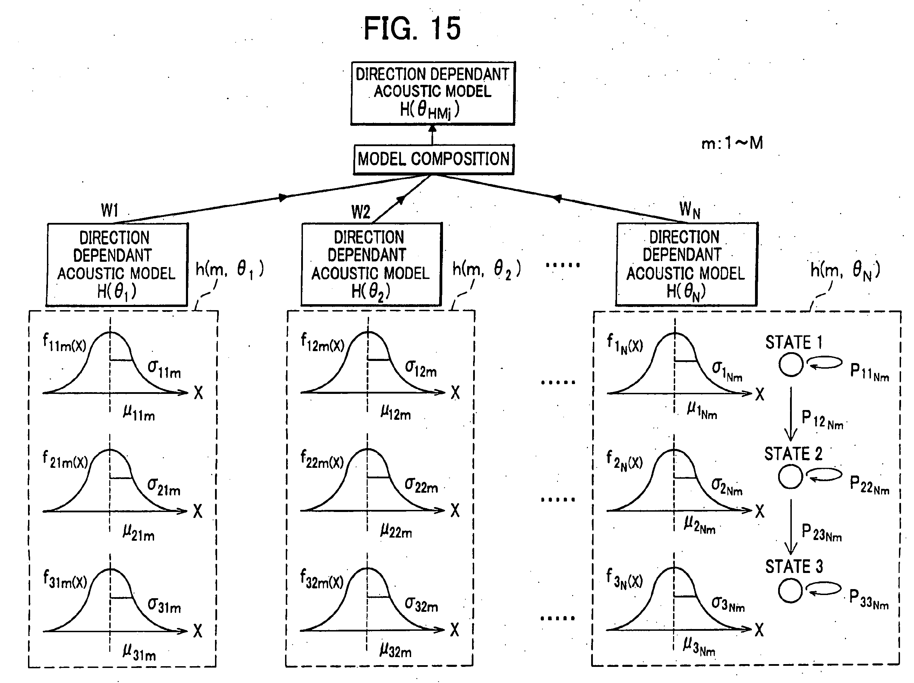

As shown in FIG.15, the parameter composition module 44 multiplies each direction-dependent acoustic model $H(\theta_n)$ by a weight and makes a sum of the resulting products, composing an acoustic model $H(\theta_{HMj})$ for a sound direction $\theta_{HMj}$. Sub-models lying in a direction-dependent acoustic model $H(\theta_n)$ are each converted to a probability density distribution of linear spectrum by the IDCT module 41, the linear spectrum converter 42 and the exponential converter 43, having parameters such as means $\mu_{1nm}$, $\mu_{2nm}$, $\mu_{3nm}$, standard deviations $\sigma_{1nm}$, $\sigma_{2nm}$, $\sigma_{3nm}$ and state transition probabilities $P_{11nm}$, $P_{12nm}$, $P_{22nm}$, $P_{23nm}$, $P_{33nm}$. The module 44 normalizes an acoustic model for a sound direction $\theta_{HMj}$ by multiplying these parameters and weights, which are obtained beforehand by training and stored in the acoustic model memory 49. In other words, the module 44 composes an acoustic model for a sound direction $\theta_{HMj}$ by taking a linear summation of direction-dependent acoustic models $H(\theta_n)$. In this connection, it will be described later how a weight $W_{n\theta HMj}$ is introduced.

When sub-models lying in $H(\theta_{HMj})$ are composed, a mean $\mu_{1\theta HMjm}$ of the state 1 is calculated by an equation (17).

$$\mu_{1\theta HMjm} = \frac{1}{\sum\limits_{n=1}^{N} W_{n\theta HMj}} \sum\limits_{n=1}^{N} W_{n\theta HMj} \mu_{1nm} \qquad (17)$$

Means $\mu_{2\theta HMjm}$ and $\mu_{3\theta HMjm}$ can be calculated similarly.

For composition of a standard deviation $\sigma_{1\theta HMjm}$ of the state 1, a covariance $\sigma_{1\theta HMjm}^2$ is calculated by an equation (18).

$$\sigma_{1\theta HMjm}{}^{2} = \frac{1}{\displaystyle\sum_{n=1}^{N} W_{n\theta HMj}} \sum_{n=1}^{N} W_{n\theta HMj}\,\sigma_{1nm}{}^{2} \qquad (18)$$

Standard deviations $\sigma2_{\theta HMjm}$ and $\sigma_{3\theta HMjm}$ can be obtained similarly. It is possible to calculate a probability density distribution with the obtained $\mu$ and $\sigma$.

Composition of a state transition probability $P_{11\theta HMjm}$ for state 1 is calculated by an equation (19).

$$P_{11\theta HMjm} = \frac{1}{\displaystyle\sum_{n=1}^{N} W_{n\theta HMj}} \sum_{n=1}^{N} W_{n\theta HMj}\,P_{11nm} \qquad (19)$$

State transition probabilities $P_{12\theta HMjm}$, $P_{22\theta HMjm}$, $P_{23\theta HMjm}$ and $P_{33\theta HMjm}$ can be calculated similarly.

Next, a probability density distribution is reconverted to MFCC by a log converter 45 through a DCT module 47. Because the log converter 45, Mel frequency converter 46 and DCT module 47 are similar to the log converter 31, Mel frequency converter 32 and DCT converter 33, respectively, description in detail is not repeated.

When a probability density distribution is composed in the form of a mixture normal distribution instead of a single normal distribution, a probability density distribution $f_{1\theta HMjm}(x)$ is calculated by an equation (20) instead of the calculation of the mean $\mu$ and standard deviation $\sigma$ described above.

$$f_{1\theta HMjm}(x) = \frac{1}{\displaystyle\sum_{n=1}^{N} W_{n\theta HMj}} \sum_{n=1}^{N} W_{n\theta HMj}\,f_{1nm}(x) \qquad (20)$$

Probability density distributions $f_{2\theta HMjm}(x)$ and $f_{3\theta HMjm}(x)$ can be calculated similarly.

The parameter composition module 44 has the acoustic model described above stored in the acoustic model memory 49.

In this connection, the parameter composition module 44 carries out in real time such acoustic model composition while the automatic speech recognition system 1 is in operation.

(Setting of a weight $W_{n\theta HMj}$)

A weight $W_{n\theta HMj}$ is assigned to a direction-dependent acoustic model $H(\theta_n)$ when an acoustic model for a sound direction $\theta_{HMj}$ is composed. It may be possible to adopt a common weight $W_{n\theta HMj}$ for all sub-models $h(m,\theta_n)$ or an individual weight $W_{mn\theta HMj}$ for each sub-model $h(m,\theta_n)$. Basically speaking, a function $f(\theta)$, which defines a weight $W_{n\theta 0}$ for a sound source lying in front of the robot RB, is prepared in advance. When an acoustic model is composed for a sound direction $\theta_{HMj}$, a corresponding function $f(\theta)$ is obtained by shifting $f(\theta)$ along a $\theta$ - axis by $\theta_{HMj}$ ($\theta\rightarrow\theta-\theta_{HMj}$). A $W_{n\theta HMj}$ is determined by referring to the resulting function $f(\theta)$.

(Generation of a function $f(\theta)$)

a. Method of generating $f(\theta)$ empirically

When $f(\theta)$ is empirically generated, $f(\theta)$ is described by the following equations with a constant "a", which is empirically obtained.

$$f(\theta) = a\theta + \alpha \quad (f(\theta) = 0 \ when \ \theta < 0, \theta = -90^{\circ})$$

$$f(\theta) = -a\theta + \alpha \quad (f(\theta) = 0 \ when \ \theta \geq 0, \theta = 90°)$$

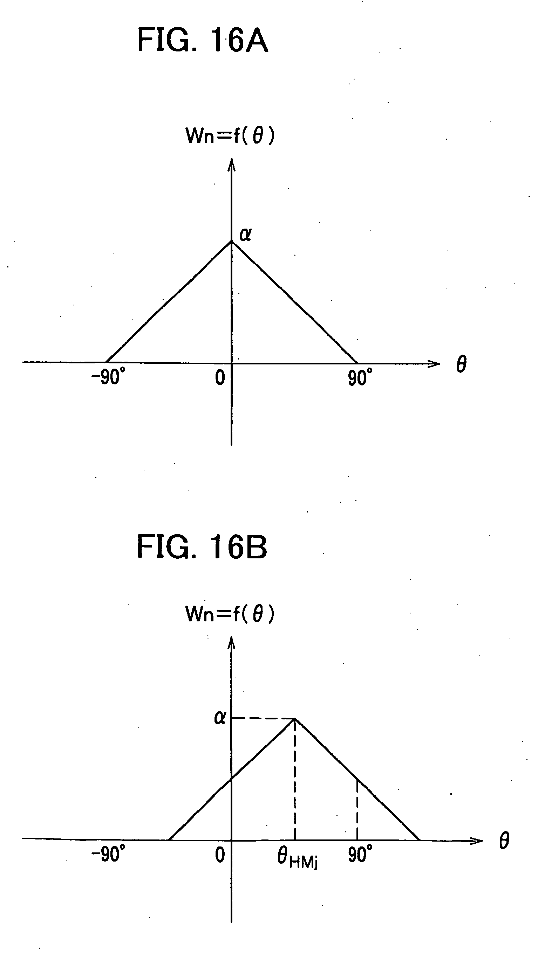

Assuming the constant $a = 1.0$, $f(\theta)$ for a front sound source results in FIG.16A. FIG.16B shows $f(\theta)$, which is shifted along the $\theta$ - axis by $\theta_{HMj}$. b. Method of generating $f(\theta)$ by training

When $f(\theta)$ is generated by training, training is carried out in the following manner, for example.

$W_{mn\theta0}$ represents a weight applied to an arbitrary phoneme "m", which lies in the front. A trial is conducted with an acoustic model $H(\theta_0)$, which is composed with a weight $W_{mn\theta0}$ that is appropriately selected as an initial value, so that the acoustic model $H(\theta_0)$ recognizes a sequence of phonemes including a phoneme "m", [m m' m"] for example. More specifically speaking, this sequence of phonemes is given by a speaker, which is placed in the front and the trial is carried out. Though it is possible to select a single phoneme "m" as training data, a sequence of phonemes is adopted here, because it is possible to attain better results of training with the sequence of phonemes, which is a train of plural phonemes.

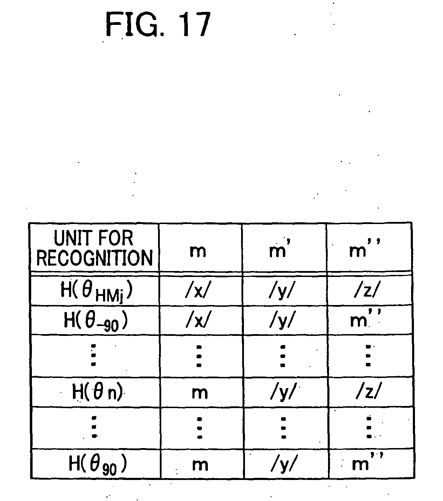

FIG.17 exemplarily shows results of recognition. In the FIG.17, the result of recognition with the acoustic model $H(\theta_{HMj})$, which is composed with the initial value $W_{mn\theta0}$, is shown in the first row, and results of recognition with the acoustic model $H(\theta_n)$ are shown in the second row or below. For example, it is shown that the recognition result with an acoustic model $H(\theta_{90})$ was a sequence of phonemes [m/y/m"] and the recognition result with an acoustic model $H(\theta_{-90})$ was a sequence of phonemes [/x//y/m"].

Seeing the first phoneme in FIG.17 after the first trail, when a corresponding phoneme is recognized for a direction within a range of $\theta = \pm90°$ relative to the front, a weight $W_{mn\theta90}$ for a model representative of the direction is increased by $\Delta d$. $\Delta d$ is set to be 0:05, for example, which is empirically determined. In contrast, when no corresponding phoneme is recognized for a direction, a weight $W_{mn\theta0}$ for a model representative of the direction is decreased by $\Delta d/(n-k)$. In this way, a weight for a direction-dependent model having produced a correct answer is increased, but one without a correct answer is decreased.

Since $H(\theta_n)$ and $H(\theta_{90})$ each have a correct answer in the case of the example shown in FIG.17, corresponding weights $W_{mn\theta}$ and $W_{m90\theta0}$ are increased by $\Delta d$, but other weights are decreased by $2\Delta d/(n-2)$.

On the other hand, when there are no directions $\theta_n$, in which a phoneme coinciding with the first phoneme is recognized and there is a dominant direction-dependent acoustic model $H(\theta_n)$ having a larger weight relative to other models, a weight is decreased for only this model $H(\theta_n)$ by $\Delta d$ and other weights are increased by $k\Delta d/(n-k)$. Because the fact that any direction-dependent acoustic model failed recognition implies that a current distribution of weights is inappropriate, a reduction in weight is implemented for the direction, in which the current weight works dominantly.

It is determined whether a weight is dominant or not by checking whether the weight is larger than a predetermined threshold (0.8 here, for example). If there are no dominant direction-dependent acoustic models $H(\theta_n)$, only the maximum weight is decreased by $\Delta d$ and other weights for other direction-dependent acoustic models $H(\theta_n)$ are increased by $\Delta d/(n-1)$.

And the trial described above is repeated with the updated weights.

When the recognition of the acoustic model $H(\theta_{90})$ results in a correct answer "m", the repetition is stopped, and recognition and training is moved to the next phoneme m' or training is stopped. When the training is stopped, the weight $W_{mn\theta90}$ obtained here will be $f(\theta)$. When moved to the next phoneme m', a mean of weights $W_{mn\theta90}$, which result from training of all the phonemes, will be $f(\theta)$.

It may be alternatively possible to assign a weight $W_{mn\theta HMj}$ corresponding to each sub-model $h(m,\theta_n)$ to $f(\theta)$ without taking a mean.

When a given number of trials ($0.5/\Delta d$ times, for example) does not allow the recognition result of an acoustic model $H(\theta_{HMj})$ to be a correct answer, recognition of "m" is not successful for example, the trial is moved to training of a next phoneme m'. Weights are updated by the same value as the distribution of weight for a phoneme (m' for example), which is successfully recognized at last.

It may be possible to prepare beforehand a common weight $W_{n\theta HMj}$, which is used by all sub-models $h(m,\theta_n)$ included in $H(\theta_n)$ (see Table 2), or Table 3, which shows a weight $W_{n\theta HMj}$ corresponding to each sub-model $h(m,\theta_n)$, for an appropriate $\theta_{HMj}$. In this connection, subscripts $1\cdots m\cdots M$ represent phonemes and $1\cdots n\cdots N$ directions, in Table 2 and Table 3.

Table 2

| $H(\theta_1)$ | $H(\theta_2)$ | ... | $H(\theta_n)$ | ... | $H(\theta_N)$ |
|---|---|---|---|---|---|
| $h(l,\theta_1)$ | $h(l,\theta_2)$ | ... | $h(l,\theta_n)$ | ... | $h(l,\theta_N)$ |

(continued)

| | | | | | |
|---|---|---|---|---|---|
| $\cdot$ $\cdot$ $\cdot$ | $\cdot$ $\cdot$ $\cdot$ | ... | $\cdot$ $\cdot$ $\cdot$ | ... | $\cdot$ $\cdot$ $\cdot$ |
| $h(m,\theta_1)$ | $h(m,\theta_2)$ | ... | $h(m,\theta_n)$ | ... | $h(m,\theta_N)$ |
| $\cdot$ $\cdot$ $\cdot$ | $\cdot$ $\cdot$ $\cdot$ | ... | $\cdot$ $\cdot$ $\cdot$ | ... | $\cdot$ $\cdot$ $\cdot$ |
| $h(M,\theta_1)$ | $h(M,\theta_2)$ | ... | $h(M,\theta_n)$ | ... | $h(M,\theta_N)$ |

Table 3

| $W_1$ | $W_2$ | .... | $W_n$ | ... | $W_N$ |
|---|---|---|---|---|---|
| $W_{11}$ | $W_{12}$ | ... | $W_{1n}$ | ... | $W_{1N}$ |
| $\cdot$ $\cdot$ $\cdot$ | $\cdot$ $\cdot$ $\cdot$ | ... | $\cdot$ $\cdot$ $\cdot$ | ... | $\cdot$ $\cdot$ $\cdot$ |
| $W_{m1}$ | $W_{m2}$ | ... | $W_{mn}$ | ... | $W_{mN}$ |
| $\cdot$ $\cdot$ $\cdot$ | $\cdot$ $\cdot$ $\cdot$ | ... | $\cdot$ $\cdot$ $\cdot$ | ... | $\cdot$ $\cdot$ $\cdot$ |
| $W_{M1}$ | $W_{M2}$ | ... | $W_{Mn}$ | ... | $W_{MN}$ |

The weights obtained by training described above are stored in the acoustic model memory 49.

(Speech recognition module 50)

Using an acoustic model $H(\theta_{HMj})$ composed for a sound direction $\theta_{HMj}$, the speech recognition module 50 recognizes features, which are extracted from separated speech of a speaker HMj or an input speech, generating character information. Subsequently, the module 50 recognizes the speech referring to the dictionary 59 to provide results of recognition. Since this method of speech recognition is based on an ordinary technique with Hidden Markov Model, description in detail would be omitted.

When a masking module, which adds an index w indicating a belief factor to each sub-band of MFCC, is disposed inside or after the feature extractor 30, the speech recognition module 50 carries out recognition after applying a process shown by an equation (21) to a received feature.

$$x_r = 1 - x_n$$
$$x_n(i) = x(i) \times \omega(i) \qquad (21)$$

$x_r$  : feature to be used for speech recognition
$x$  : MFCC
$i$  : component of MFCC
$x_n$  : unreliable component of $x$

Using the obtained output probability and state transition probability, the module 50 performs recognition in the same manner as that of general Hidden Markov Model.

Description is given of operation carried out by an automatic speech recognition system 1 configured as described above.

As shown in FIG.1, speeches of a plurality of speakers HMj (see FIG.3) enter microphones $M_R$ and $M_L$ of a robot RB.

Sound directions of acoustic signals detected by the microphones $M_R$ and $M_L$ are localized by a sound source localization module 10. As described above, the module 10 calculates a belief factor with hypothesis by auditory epipolar geometry after conducting frequency analysis, peak extraction, extraction of harmonic relationship and calculation of IPD and IID. Integrating IPD and IID, the module 10 subsequently regards the most probable $\theta_{HM_j}$ as a sound direction (see FIG.2).

Next, a sound source separation module 20 separates a sound corresponding to a sound direction $\theta_{HM_j}$. Sound separation is carried out in the following manner. First, the module 20 obtains upper limits $\Delta\phi_h(f)$ and $\Delta\rho_h(f)$, and lower limits $\Delta\phi_l(f)$ and $\Delta\rho_l(f)$ for IPD and IID for a sound direction $\theta_{HM_j}$ with a pass range function. The module 20 selects sub-bands (selected spectrum) which are estimated to be a spectrum for the sound direction $\theta_{HM_j}$ by introducing the equation (16) described above and these upper limits and lower limits. Subsequently, the module 20 converts the spectrum of the selected sub-bands by reverse FFT, transforming the spectrum into speech signals.

A feature extractor 30 converts the selected spectrum separated by the sound source separation module 20 into MFCC by a log spectrum converter 31, a Mel frequency converter 32 and a DCT module 33.

On the other hand, an acoustic model composition module 40 composes an acoustic model, which is considered appropriate for a sound direction $\theta_{HM_j}$ receiving a direction-dependent acoustic model $H(\theta_n)$ stored in an acoustic model memory 49 and a sound direction $\theta_{HM_j}$ localized by the sound source localization module 10.

The acoustic model composition module 40, which has an IDCT module 41, a linear spectrum converter 42 and an exponential converter 43, converts the direction-dependent acoustic model $H(\theta_n)$ into a linear spectrum. A parameter composition module 44 composes an acoustic model $H(\theta_{HM_j})$ for a sound direction $\theta_j$ by taking an inner product of a direction-dependent acoustic model $H(\theta_n)$ and a weight $W_{n\theta_j}$ for a sound direction $\theta_j$, which the module 44 reads out from the acoustic model memory 49. The module 40, which has a log spectrum converter 45, a Mel frequency converter 46 and a DCT module 47, converts this acoustic model $H(\theta_{HM_j})$ in the form of a linear spectrum to an acoustic model $H(\theta_{HM_j})$ in the form of MFCC.

Next, a speech recognition module 50 carries out speech recognition with Hidden Markov Model, using the acoustic model $H(\theta_{HM_j})$ composed by the acoustic model composition module 40.

Table 4 shows an example resulting from the method described above.

Table 4

| | Conventional method | | | | | | | This invention |
|---|---|---|---|---|---|---|---|---|
| Direction of acoustic model | -90˚ | -60˚ | -30˚ | 0˚ | 30˚ | 60˚ | 90˚ | 40˚ |
| Recognition rate of isolated word | 20% | 20% | 38% | 42% | 60% | 59% | 50% | 78% |

As shown in Table 4, when direction-dependent acoustic models were prepared for a range of -90˚ to 90˚ at regular intervals of 30˚ and speech recognition was carried out for isolated words with each acoustic model in a direction of 40˚ (conventional method), the best recognition rate was 60%, which was obtained by a direction-dependent acoustic model for a direction of 30˚. In contrast, recognition of isolated words with an acoustic model for a direction of 40˚ , which was composed with a method according to this embodiment, attained high recognition rate of 78%. Because it is possible for an automatic speech recognition system 1 according to this embodiment to compose an appropriate acoustic model each time speech is uttered in an arbitrary direction, high recognition rate can be realized. In addition, it is possible for the system 1, which is able to recognize speech uttered in an arbitrary direction, to implement speech recognition with high recognition rate while a sound source or a moving object (robot RB) is moving.

Because it may be alternatively possible to prepare a small number of direction-dependent acoustic models, at intervals of 60˚ or 30˚ in terms of sound direction, for example, it may be possible to decrease costs necessary for training of the acoustic models.

Because it is sufficient to carry out speech recognition for a single composed acoustic model, parallel processing is not required so as to carry out speech recognition for acoustic models representative of plural directions, which may lead to a reduction in calculation cost. Therefore, the automatic speech recognition system 1 according to this embodiment is appropriate for real-time processing and embedded use.

The present invention is not limited to the first embodiment, which has been described so far, but it may be possible to implement alternatives such as modified embodiments described below.

[Second embodiment]

A second embodiment of the present invention has a sound source localization module 110, which localizes a sound direction with a peak of correlation, instead of the sound source localization module 10 of the first embodiment. Because the second embodiment is similar to the first embodiment except for this difference, description would not be repeated for other modules.

(Sound source localization module 110)

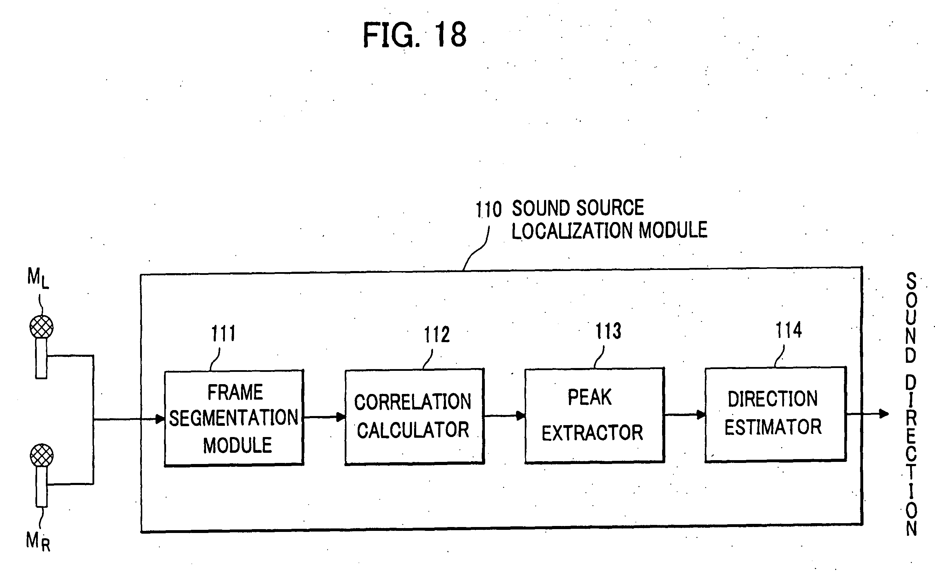

As shown in FIG.18, the sound source localization module 110 includes a frame segmentation module 111, a correlation calculator 112, a peak extractor 113 and a direction estimator 114.

(Frame segmentation module 111)

The frame segmentation module 111 segments acoustic signals, which have entered right and left microphones $M_R$ and $M_L$, so as to generate segmental acoustic signals having a given time length, 100msec for example. Segmentation process is carried out at appropriate time intervals, 30msec for example.

(Correlation calculator 112)

The correlation calculator 112 calculates a correlation by an equation (22) for the acoustic signals of the right and left microphones $M_R$ and $M_L$, which have been segmented by the frame segmentation module 111.

$$CC(T) = \int_0^T x_L(t) x_R(t+T) dt \qquad (22)$$

where:

$CC(T)$: correlation between $x_L(t)$ and $x_R(t)$
$T$ : frame length
$x_L(t)$ : input signal from the microphone $M_L$ segmented by frame length $T$
$x_R(t)$ : input signal from the microphone $M_R$ segmented by frame length $T$

(Peak extractor 113)

The peak extractor 113 extracts peaks from the resulting correlations. Peaks are selected in order of peak height while their number is adjusted to the number of sound sources when it is known in advance. When the number of sound sources is not known, on the other hand, it may be possible to extracts all peaks exceeding a predetermined threshold or a predetermined number of peaks in order of peak height.

(Direction estimator 114)

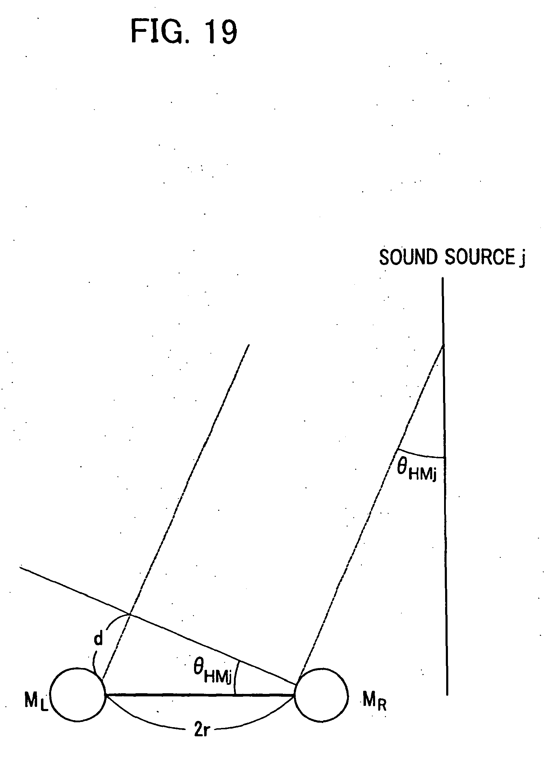

Receiving the obtained peaks, the direction estimator 114 calculates a difference of distance "d" shown in FIG. 19 by multiplying an arrival time difference D of acoustic signals entering the right and left microphones $M_R$ and $M_L$ by sound velocity "v". The direction estimator 114 then generates a sound direction $\theta_{HMj}$ by the following equation.

$$\theta_{HMj} = \arcsin(d/2r)$$

The sound source localization module 110, which introduces the correlation described above, is also able to estimate a sound direction $\theta_{HMj}$. It is possible to increase a recognition rate with an acoustic model appropriate for the sound direction $\theta_{HMj}$, which is composed by an acoustic model composition module 40 described above.

[Third embodiment]

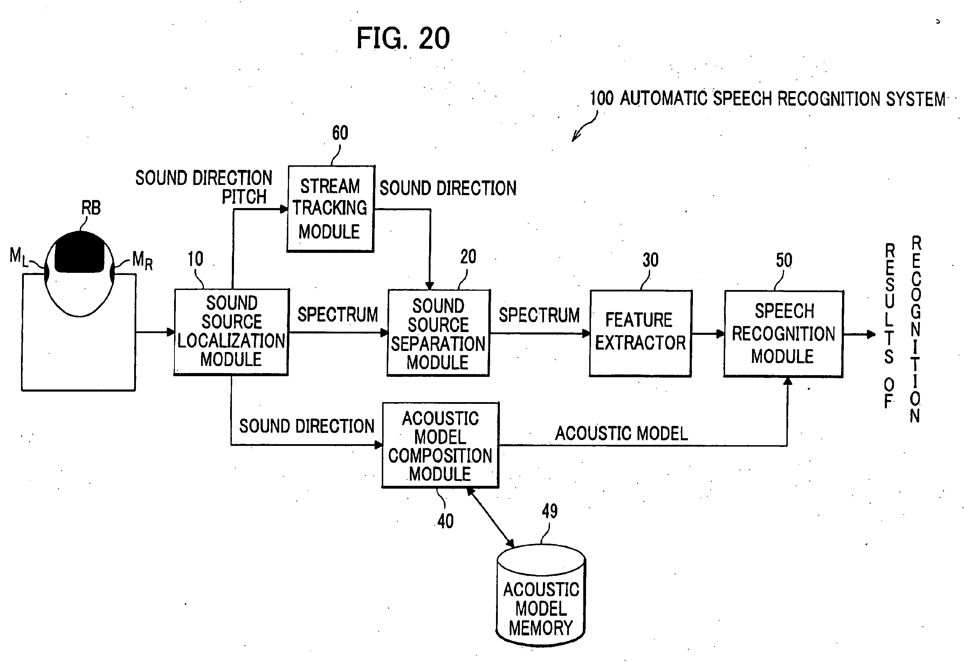

A third embodiment has an additional function that a sound source localization module performs speech recognition while it is checking if acoustic signals come from a same sound source. Description would not be repeated for modules which are similar to those described in the first embodiment, bearing the same symbols.
As shown in FIG.20, an automatic speech recognition system 100 according to the third embodiment has an additional module, a stream tracking module 60, compared with the automatic speech recognition system 1 according to the first embodiment. Receiving a sound direction localized by a sound source localization module 10, the stream tracking module 60 tracks a sound source so that it checks if acoustic signals continue coming from the same sound source. If it succeeds in confirmation, the stream tracking module 60 sends the sound direction to a sound source separation module 20.

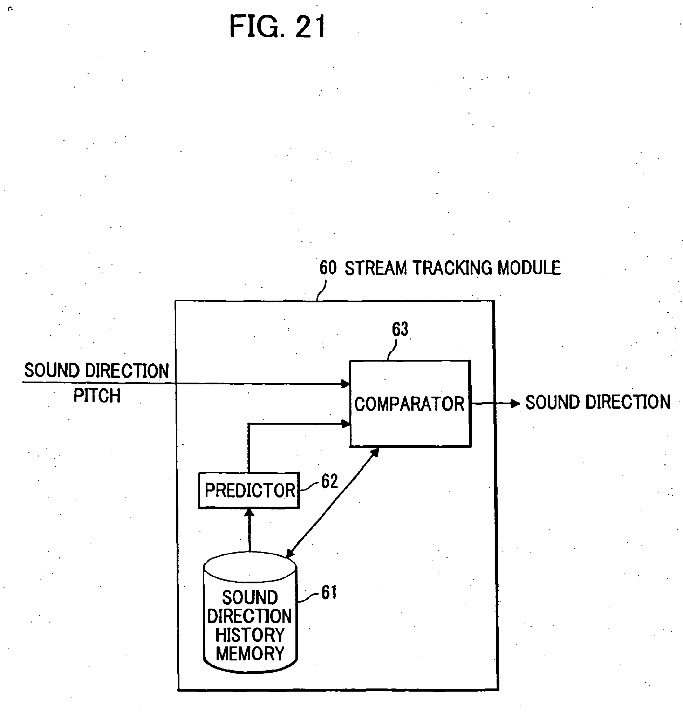

As shown in FIG.21, the stream tracking module 60 has a sound direction history memory 61, a predictor 62 and a comparator 63.

The sound direction history memory 61 stores time, a direction and a pitch (a fundamental frequency $f_0$ which a harmonic relationship of the sound source possesses) of a sound source at this time, in the correlated form.

The predicator 62 reads out the sound direction history of the sound source, which has being tracked so far, from the sound direction history memory 61. Subsequently, the predicator 62 predicts a stream feature vector $(\theta_{HM_j}, f_0)$ with a Kalman filter and the like, which is made of a sound direction $\theta_{HM_j}$ and a fundamental frequency $f_0$ at current time t1, sending the stream feature vector $(\theta_{HM_j}, f_0)$ to the comparator 63.

The comparator 63 receives from the sound source localization module 10 a sound direction $\theta_{HM_j}$ of each speaker HMj and a fundamental frequency $f_0$ of the sound source at current time t1, which has been localized by the sound source localization module 10. The comparator 63 compares a predicted stream feature vector $(\theta_{HM_j}, f_0)$, which is sent by the predicator 62, and a stream feature vector $(\theta_{HM_j}, f_0)$ resulting from a sound direction and a pitch, which are localized by the sound source localization module 10. If a resulting difference (distance) is less than a predetermined threshold, the comparator 63 sends the sound direction $\theta_{HM_j}$ to the sound source separation module. The comparator 63 also makes the stream feature vector $(\theta_{HM_j}, f_0)$ store in the sound direction history memory 61.

If the difference (distance) is more than the predetermined threshold, the comparator 63 does not send the localized sound direction $\theta_{HM_j}$ to the sound source separation module 20, so that speech recognition is not carried out. In this connection, it may be alternatively possible for the comparator 63 to send data, which indicates whether or not a sound source can be tracked, to the sound source separation module 20 in addition to a sound direction $\theta_{HM_j}$.

It may be alternatively possible to use only a sound direction $\theta_{HM_j}$ without a fundamental frequency $f_0$ in performing prediction.

In the automatic speech recognition system 100, a sound direction which is localized by the sound source localization module 10 and a pitch enter the stream tracking module 60 described above. In the stream tracking module 60, the predicator 62 reads out a sound direction history stored in the sound direction history memory 61, predicting a stream feature vector $(\theta_{HM_j}, f_0)$ at a current time t1. The comparator 63 compares a stream feature vector $(\theta_{HM_j}, f_0)$ which is predicted by the predicator 62 and a stream feature vector $(\theta_{HM_j}, f_0)$ resulting from values, which are sent by the sound source localization module 10. If the difference (distance) is less than a predetermined threshold, the comparator 63 sends a sound direction to the sound source separation module 20.

The sound source separation module 20 separates sound sources based on spectrum data, which is sent by the sound source localization module 10, and sound direction $\theta_{HM_j}$ data, which is sent by the stream tracking module 60, in the similar manner as that of the first embodiment. A feature extractor 30, an acoustic model composition module 40 and a speech recognition module 50 carry out processes in the similar manner as that of the first embodiment.

Because the automatic speech recognition system 100 according to this embodiment carries out speech recognition as a result of checking if a sound source can be tracked, it is able to keep carrying recognition for a speech uttered by the same sound source even if the sound source is moving, which will lead to a reduction in probability for false recognition. The automatic speech recognition system 100 is beneficial for a situation where there is a plurality of moving sound sources, which intersect each other.

In addition, the automatic speech recognition system 100, which not only stores but also predicts sound directions, is able to decrease an amount of processing if searching for a sound source is limited to a certain area corresponding to a particular sound direction.

While the embodiments of the present invention have been described, the present invention is not limited to these embodiments, but can be implemented with various changes and modifications.

One example is an automatic speech recognition system 1, which includes a camera, a well-known image recognition system and a speaker identification module, which recognizes a face of a speaker and identifies the speaker referring to its database. When the system 1 possesses direction-dependent acoustic models for each speaker, it is possible to compose an acoustic model appropriate for each speaker, which enables higher recognition rate. It may be possible to adopt an alternative, which introduces speeches of speakers registered in advance in the form of vector by vector quantization (VQ). The system 1 compares the registered speeches and a speech in the form of vector which the sound source separation module 20 separates, outputting the resulting speaker having the smallest distance.

**Claims**

**1.** An automatic speech recognition system (1, 100), which recognizes speeches in acoustic signals detected by a plurality of microphones ($M_R$, $M_L$) as character information, the system comprising:

> a sound source localization module (10) which localizes a sound direction corresponding to a specified speaker based on the acoustic signals detected by the plurality of microphones ($M_R$, $M_L$);
> a feature extractor (30) which extracts features of speech signals contained in one or more pieces of information detected by the plurality of microphones ($M_R$, $M_L$); and
> an acoustic model memory (49) which stores direction-dependent acoustic models that are adjusted to a plurality of directions at intervals;

**characterised by**:

> an acoustic model composition module (40) which, based on the direction-dependent acoustic models in the acoustic model memory (49), composes an acoustic model adjusted to the sound direction which is localized by the sound source localization module (10), the acoustic model composition module storing the acoustic model in the acoustic model memory (49); and
> a speech recognition module (50) which recognizes the features extracted by the feature extractor (30) as character information using the acoustic model composed by the acoustic model composition module (40).

2. A system according to claim 1, which recognizes speeches of a specified speaker in acoustic signals detected by the plurality of microphones ($M_R$, $M_L$) as character information, wherein the system further comprises:

> a sound source separation module (20) which separates speech signals of the specified speaker from the acoustic signals based on the sound direction localized by the sound source localization module (10); and wherein
> the feature extractor extracts features of the speech signals separated by the sound source separation module (20).

3. A system according to claim 2, wherein the sound source separation module (20) employs an active direction-pass filter so as to separate speeches, the filter being configured to execute a process comprising:

> separating speeches by a narrower directional band when a sound direction, which is localized by the sound source localization module (10), lies close to a front, which is defined by an arrangement of the plurality of microphones ($M_R$, $M_L$); and
> separating speeches by a wider directional band when the sound direction lies apart from the front.

4. A system according to claim 1, 2 or 3, wherein the sound source localization module (10) is configured to execute a process comprising:

> performing a frequency analysis for the acoustic signals detected by the microphones ($M_R$, $M_L$) to extract harmonic relationships;
> acquiring an intensity difference and a phase difference for the harmonic relationships extracted through the plurality of microphones ($M_R$, $M_L$);
> acquiring belief factors for a sound direction based on the intensity difference and the phase difference, respectively; and
> determining a most probable sound direction.

5. A system according to any one of claims 1 to 4, wherein the sound source localization module (10) employs scattering theory that generates a model for an acoustic signal, which scatters on a surface of a member to which the microphones ($M_R$, $M_L$) are attached, according to a sound direction so as to specify the sound direction for the speaker with the intensity difference and the phase difference detected from the plurality of microphones ($M_R$, $M_L$).

6. A system according to any one of claims 1 to 5, wherein the acoustic model composition module (40) is configured to compose an acoustic model for the sound direction by applying weighted linear summation to the direction-dependent acoustic models in the acoustic model memory (49), and weights introduced into the linear summation are determined by training.

7. A system according to any one of claims 1 to 6, further comprising a speaker identification module, wherein the acoustic model memory possesses the direction-dependent acoustic models for respective speakers, and

wherein the acoustic model composition module (40) is configured to execute a process comprising:

referring to direction-dependent acoustic models of a speaker who is identified by the speaker identifying module and to a sound direction localized by the sound source localization module;
composing an acoustic model for the sound direction based on the direction-dependent acoustic models in the acoustic model memory (49); and
storing the acoustic model in the acoustic model memory (49).

8. A system according to claim 2, wherein the system further comprises:

a stream tracking module (60) which stores the sound direction localized by the sound source localization module (10) so as to estimate a direction in which the specified speaker is moving, the stream tracking module (60) estimating a current position of the speaker according to the estimated direction; and wherein the sound source separation module (20) determines a sound direction by the current position of the speaker estimated by the stream tracking module (60).

**Patentansprüche**

1. Automatisches Spracherkennungssystem (1, 100), das in von einer Mehrzahl von Mikrofonen ($M_R$, $M_L$) erfassten akustischen Signalen Sprache als Zeicheninformation erkennt, wobei das System umfasst:

ein Schallquellenlokalisierungsmodul (10), das eine Schallrichtung, die einem bestimmten Sprecher entspricht, basierend auf den von der Mehrzahl von Mikrofonen ($M_R$, $M_L$) erfassten akustischen Signalen lokalisiert;
einen Merkmalsextrahierer (30), der Merkmale von Sprachsignalen, die in einem oder mehreren Stücken der von der Mehrzahl von Mikrofonen ($M_R$, $M_L$) erfassten Information enthalten sind, extrahiert; und
einen Akkustikmodell-Speicher (49), der richtungsabhängige akustische Modelle speichert, die auf eine Mehrzahl von Richtungen in Intervallen eingestellt sind;

**gekennzeichnet durch**:

ein Akustikmodellzusammensetzungsmodul (40), das, basierend auf den richtungsabhängigen akustischen Modellen in dem Akustikmodellspeicher (49) ein auf die Schallrichtung, die **durch** das Schallquellenlokalisierungsmodul (10) lokalisiert ist, eingestelltes akustisches Modell zusammensetzt, wobei das Akustikmodellzusammensetzungsmodul das akustische Modell in dem Akustikmodellspeicher (49) speichert; und
ein Spracherkennungsmodul (50), das, unter Verwendung des von dem Akustikmodellzusammensetzungsmodul (40) zusammensetzten akustischen Modells, die von dem Merkmalsextrahierer (30) extrahierten Merkmale als Zeicheninformation erkennt.

2. System nach Anspruch 1, das Sprache eines bestimmten Sprechers in von der Mehrzahl von Mikrofonen ($M_R$, $M_L$) erfassten akustischen Signalen als Zeicheninformation erkennt, wobei das System ferner umfasst:

ein Schallquellenseparationsmodul (20), das Sprachsignale des bestimmten Sprechers aus den akustischen Signalen basierend auf der von dem Schallquellenlokalisierungsmodul (10) lokalisierten Schallrichtung abtrennt; und worin
der Merkmalsextrahierer die Merkmale der von dem Schallquellenseparationsmodul (20) abgetrennten Sprachsignale extrahiert.

3. System nach Anspruch 2, worin das Schallquellenseparationsmodul (20) einen aktiven Richtungsdurchlassfilter verwendet, um Sprache abzutrennen, wobei der Filter zur Ausführung eines Prozesses konfiguriert ist, der umfasst:

Abtrennen von Sprache durch ein schmaleres Richtungsband, wenn eine Schallrichtung, die durch das Schallquellenlokalisierungsmodul (10) lokalisiert worden ist, in der Nähe einer Front liegt, welche durch eine Anordnung der Mehrzahl von Mikrofonen ($M_R$, $M_L$) definiert ist; und
Abtrennen von Sprache durch ein breiteres Richtungsband, wenn die Schallrichtung von der Front weiter entfernt liegt.

**4.** System nach Anspruch 1, 2 oder 3, worin das Schallquellenlokalisierungsmodul (10) zur Ausführung eines Prozesses konfiguriert ist, der umfasst:

Durchführen einer Frequenzanalyse für die von den Mikrofonen ($M_R$, $M_L$) erfassten akustischen Signale, um Oberschwingungs-Beziehungen zu extrahieren;
Erfassen einer Intensitätdifferenz und einer Phasendifferenz für die extrahierten Oberschwingungs-Beziehungen durch die Mehrzahl von Mikrofonen ($M_R$, $M_L$);
Erfassen von Annahmefaktoren für eine Schallrichtung basierend jeweils auf der Intensitätsdifferenz und der Phasendifferenz; und
Bestimmen einer höchstwahrscheinlichen Schallrichtung.

**5.** System nach einem der Ansprüche 1 bis 4, worin das Schallquellenlokalisierungsmodul (10) eine Streutheorie verwendet, die ein Modell für ein akustisches Signal, das auf einer Oberfläche eines Elements streut, an dem die Mikrofone ($M_R$, $M_L$) angebracht sind, gemäß einer Schallrichtung erzeugt, um die Schallrichtung für den Sprecher mit der von der Mehrzahl von Mikrofonen ($M_R$, $M_L$) erfassten Intensitätsdifferenz und der Phasendifferenz zu spezifizieren.

**6.** System nach einem der Ansprüche 1 bis 5, worin das Akustikmodellzusammensetzungsmodul (40) konfiguriert ist, um ein akustisches Modell für die Schallrichtung zusammenzusetzen, in dem eine gewichtete lineare Summierung auf die richtungsabhängigen akustischen Modelle in dem Akustikmodellspeicher (49) angewendet wird, und die in die lineare Summierung eingeführten Gewichtungen durch Training bestimmt werden.

**7.** System nach einem der Ansprüche 1 bis 6, das ferner ein Sprecheridentifizierungsmodul aufweist,
wobei der Akustikmodellspeicher die richtungsabhängigen akustischen Modelle für die jeweiligen Sprecher besitzt, und
worin das Akustikmodellzusammensetzungsmodul (40) zur Ausführung eines Prozesses konfiguriert ist, der umfasst:

Bezugnahme auf richtungsabhängige akustische Modelle eines Sprechers, der durch das Sprecheridentifizierungsmodul identifiziert ist, und auf eine Schallrichtung, die durch das Schallquellenlokalisierungsmodul lokalisiert ist; Zusammensetzen eines akustischen Modells für die Schallrichtung basierend auf den richtungsabhängigen akustischen Modellen in dem Akustikmodellspeicher (49); und
Speichern des akustischen Modells in dem Akustikmodellspeicher (49).

**8.** System nach Anspruch 2, worin das System ferner umfasst:

ein Datenstromverfolgungsmodul (60), das die von dem Schallquellenlokalisierungsmodul (10) lokalisierte Schallrichtung speichert, um eine Richtung zu schätzen, in der sich der bestimmte Sprecher bewegt,

wobei das Datenstromverfolgungsmodul (60) eine gegenwärtige Position des Sprechers gemäß der geschätzten Richtung schätzt; und worin das Schallquellenlokalisierungsmodul (20) eine Schallrichtung aus der vom Datenstromverfolgungsmodul (60) geschätzten gegenwärtigen Position des Sprechers bestimmt.

## Revendications

**1.** Système de reconnaissance vocale automatique (1, 100), qui reconnaît des paroles dans des signaux acoustiques détectés par une pluralité de microphones ($M_R$, $M_L$) en tant qu'informations de personnage, le système comprenant :

un module de localisation de source sonore (10) qui localise une direction du son correspondant à un locuteur spécifié sur la base des signaux acoustiques détectés par la pluralité de microphones ($M_R$, $M_L$) ;
un extracteur de caractéristiques (30) qui extrait des caractéristiques de signaux vocaux contenues dans un ou plusieurs éléments d'informations détectés par la pluralité de microphones ($M_R$, $M_L$) ; et
une mémoire de modèles acoustiques (49) qui mémorise des modèles acoustiques dépendants de la direction qui sont ajustés à une pluralité de directions à des intervalles ;

**caractérisé par** :

un module de composition de modèle acoustique (40) qui, sur la base des modèles acoustiques dépendants de la direction dans la mémoire de modèles acoustiques (49), compose un modèle acoustique ajusté à la direction du son qui est localisée par le module de localisation de source sonore (10), le module de composition de modèle acoustique mémorisant le modèle acoustique dans la mémoire de modèles acoustiques (49) ; et un module de reconnaissance vocale (50) qui reconnaît les caractéristiques extraites par l'extracteur de caractéristiques (30) en tant qu'informations de personnage en utilisant le modèle acoustique composé par le module de composition de modèle acoustique (40).

2. Système selon la revendication 1, qui reconnaît les paroles d'un locuteur spécifié dans des signaux acoustiques détectés par la pluralité de microphones ($M_R$, $M_L$) en tant qu'informations de personnage, dans lequel le système comprend en outre :

un module de séparation de source sonore (20) qui sépare les signaux vocaux du locuteur spécifié des signaux acoustiques sur la base de la direction du son localisée par le module de localisation de source sonore (10) ; et dans lequel l'extracteur de caractéristiques extrait des caractéristiques des signaux vocaux séparés par le module de séparation de source sonore (20).

3. Système selon la revendication 2, dans lequel le module de séparation de source sonore (20) utilise un filtre laissant passer la direction active de manière à séparer les paroles, le filtre étant configuré pour exécuter un processus comprenant les étapes consistant à :

séparer les paroles par une bande directionnelle plus étroite lorsqu'une direction du son, qui est localisée par le module de localisation de source sonore (10), est près de l'avant, qui est défini par un agencement de la pluralité de microphones ($M_R$, $M_L$) ; et séparer les paroles par une bande directionnelle plus large lorsque la direction du son est éloignée de l'avant.

4. Système selon la revendication 1, 2 ou 3, dans lequel le module de localisation de source sonore (10) est configuré pour exécuter un processus comprenant les étapes consistant à :

appliquer une analyse fréquentielle aux signaux acoustiques détectés par les microphones ($M_R$, $M_L$) pour extraire les relations harmoniques ; acquérir une différence d'intensité et une différence de phase pour les relations harmoniques extraites par l'intermédiaire de la pluralité de microphones ($M_R$, $M_L$) ; acquérir des facteurs de croyances pour une direction du son sur la base de la différence d'intensité et de la différence de phase, respectivement ; et déterminer une direction du son la plus probable.

5. Système selon l'une quelconque des revendications 1 à 4, dans lequel le module de localisation de source sonore (10) utilise une théorie de dispersion qui génère un modèle pour un signal acoustique, qui se disperse sur une surface d'un élément auquel les microphones ($M_R$, $M_L$) sont fixés, en fonction d'une direction du son de manière à spécifier la direction du son pour le locuteur avec la différence d'intensité et la différence de phase détectées par la pluralité de microphones ($M_R$, $M_L$).

6. Système selon l'une quelconque des revendications 1 à 5, dans lequel le module de composition de modèle acoustique (40) est configuré pour composer un modèle acoustique pour la direction du son en appliquant une sommation linéaire pondérée aux modèles acoustiques dépendants de la direction dans la mémoire de modèles acoustiques (49), et les coefficients de pondération introduits dans la sommation linéaire sont déterminés par apprentissage.

7. Système selon l'une quelconque des revendications 1 à 6, comprenant en outre un module d'identification de locuteur, dans lequel la mémoire de modèles acoustiques contient les modèles acoustiques dépendants de la direction pour les locuteurs respectifs, et dans lequel le module de composition de modèle acoustique (40) est configuré pour exécuter un processus comprenant les étapes consistant à :

se référer aux modèles acoustiques dépendants de la direction d'un locuteur qui est identifié par le module d'identification de locuteur et à une direction du son localisée par le module de localisation de source sonore ;

composer un modèle acoustique pour la direction du son sur la base des modèles acoustiques dépendants de la direction dans la mémoire de modèles acoustiques (49) ; et

mémoriser le modèle acoustique dans la mémoire de modèles acoustiques (49).

8. Système selon la revendication 2, dans lequel le système comprend en outre :

un module de suivi de flot (60) qui mémorise la direction du son localisée par le module de localisation de source sonore (10) de manière à estimer une direction dans laquelle le locuteur spécifié se déplace, le module de suivi de flot (60) estimant une position actuelle du locuteur en fonction de la direction estimée ; et dans lequel le module de séparation de source sonore (20) détermine une direction du son par la position actuelle du locuteur estimée par le module de suivi de flot (60).

## FIG. 1

EP 1 691 344 B1

1 AUTOMATIC SPEECH RECOGNITION SYSTEM

RB

M$_L$    M$_R$

| 10 | | 20 | | 30 | | 50 |
|---|---|---|---|---|---|---|

SOUND SOURCE LOCALIZATION MODULE → SOUND DIRECTION / SPECTRUM → SOUND SOURCE SEPARATION MODULE → SPECTRUM → FEATURE EXTRACTOR → SPEECH RECOGNITION MODULE → RESULTS OF RECOGNITION

SOUND DIRECTION → ACOUSTIC MODEL COMPOSITION MODULE → ACOUSTIC MODEL → 

40

ACOUSTIC MODEL MEMORY 49

DICTIONARY 59

# FIG. 2

10 SOUND SOURCE LOCALIZATION MODULE

$M_L$

$M_R$

| 11 FREQUENCY ANALYSIS MODULE | → | 12 PEAK EXTRACTOR | → | 13 HARMONIC RELATIONSHIP EXTRACTOR | → | 14 IPD CALCULATOR | → | 17 BELIEF FACTOR CALCULATOR | → | 18 BELIEF FACTOR INTEGRATOR |

15 IID CALCULATOR

16 HYPOTHESIS BY AUDITORY EPIPOLAR GEOMETRY

SPECTRUM

SOUND DIRECTION

FIG. 3

EP 1 691 344 B1

# FIG. 4

L
IPD ↑

C51 INTERAURAL
PHASE
DIFFERENCE

f(Hz)

R

L
IID ↑

C61 INTERAURAL
INTENSITY
DIFFERENCE

f(Hz)

R

FIG. 5

S SOUND SOURCE

AUDITORY EPIPOLAR GEOMETRY

$\theta$

$M_L$

$M_R$

$2r$

FIG. 6

EP 1 691 344 B1

## FIG. 7A

## FIG. 7B

# FIG. 8

20 SOUND SOURCE
SEPARATION MODULE

22

SOUND
DIRECTION
SPECTRUM

SUBBAND
SELECTOR

SPECTRUM

21

PASS
RANGE
FUNCTION

# FIG. 9

FIG. 10

CR2 SPECTRUM

C52 INTERAURAL PHASE DIFFERENCE

SELECT BY IPD

C53 INTERAURAL PHASE DIFFERENCE

B PASS RANGE

$\Delta\phi_h(f)$

$\Delta\phi_\ell(f)$

fth

CL2 SPECTRUM

C62 INTERAURAL INTENSITY DIFFERENCE

SELECT BY IID

C63 INTERAURAL INTENSITY DIFFERENCE

B PASS RANGE

$\Delta\rho_h(f)$

$\Delta\rho_\ell(f)$

fth

EP 1 691 344 B1

# FIG. 11

FIG. 12A

30 FEATURE EXTRACTOR

SELECTED
SPECTRUM

| 31 | 32 | 33 |
|---|---|---|
| LOG SPECTRUM CONVERTER | MEL FREQUENCY CONVERTER | DCT MODULE |

MFCC

FIG. 12B

30 FEATURE EXTRACTOR

EXPECTED
SPEECH SPECTRUM

SELECTED
SPECTRUM

| 31 | 32 | 33 | 34 |
|---|---|---|---|
| LOG SPECTRUM CONVERTER | MEL FREQUENCY CONVERTER | DCT MODULE | MASKING MODULE |

$\omega$

MFCC

EP 1 691 344 B1

# FIG. 13

SOUND DIRECTION $\theta$

40 ACOUSTIC MODEL COMPOSITION MODULE

| 41 | 42 | 43 | 44 | 45 | 46 | 47 |
|---|---|---|---|---|---|---|
| IDCT MODULE | LINEAR SPECTRUM CONVERTER | EXPONENTIAL CONVERTER | PARAMETER COMPOSITION MODULE | LOG SPECTRUM CONVERTER | MEL FREQUENCY CONVERTER | DCT MODULE |

ACOUSTIC MODEL FOR DIRECTION $\theta$

49

ACOUSTIC MODEL MEMORY

EP 1 691 344 B1

# FIG. 14

| UNIT FOR RECOGNITION | SUB-MODEL |
|---|---|
| /a/ | $h(/a/, \theta n)$ |
| /b/ | $h(/b/, \theta n)$ |
| $\vdots$ | $\vdots$ |
| m | $h(m, \theta n)$ |
| $\vdots$ | $\vdots$ |

# FIG. 15

m:1~M

DIRECTION DEPENDANT
ACOUSTIC MODEL
$H(\theta_{HMj})$

MODEL COMPOSITION

W1

DIRECTION
DEPENDANT
ACOUSTIC MODEL
$H(\theta_1)$

$h(m, \theta_1)$

$f_{11m(X)}$
$\sigma_{11m}$
X
$\mu_{11m}$

$f_{21m(X)}$
$\sigma_{21m}$
X
$\mu_{21m}$

$f_{31m(X)}$
$\sigma_{31m}$
X
$\mu_{31m}$

W2

DIRECTION
DEPENDANT
ACOUSTIC MODEL
$H(\theta_2)$

$h(m, \theta_2)$

$f_{12m(X)}$
$\sigma_{12m}$
X
$\mu_{12m}$

$f_{22m(X)}$
$\sigma_{22m}$
X
$\mu_{22m}$

$f_{32m(X)}$
$\sigma_{32m}$
X
$\mu_{32m}$

$\cdots\cdots$

$W_N$

DIRECTION
DEPENDANT
ACOUSTIC MODEL
$H(\theta_N)$

$h(m, \theta_N)$

$f_{1N(X)}$
$\sigma_{1Nm}$
X
$\mu_{1Nm}$

$f_{2N(X)}$
$\sigma_{2Nm}$
X
$\mu_{2Nm}$

$f_{3N(X)}$
$\sigma_{3Nm}$
X
$\mu_{3Nm}$

STATE 1
$P_{11Nm}$

$P_{12Nm}$

STATE 2
$P_{22Nm}$

$P_{23Nm}$

STATE 3
$P_{33Nm}$

EP 1 691 344 B1

# FIG. 16A

# FIG. 16B

# FIG. 17

| UNIT FOR RECOGNITION | m | m' | m'' |
|---|---|---|---|
| $H(\theta_{HMj})$ | /x/ | /y/ | /z/ |
| $H(\theta_{-90})$ | /x/ | /y/ | m'' |
| ⋮ | ⋮ | ⋮ | ⋮ |
| $H(\theta_n)$ | m | /y/ | /z/ |
| ⋮ | ⋮ | ⋮ | ⋮ |
| $H(\theta_{90})$ | m | /y/ | m'' |

EP 1 691 344 B1

# FIG. 18

110 SOUND SOURCE
LOCALIZATION MODULE

$M_L$

$M_R$

| 111 | 112 | 113 | 114 |
|---|---|---|---|
| FRAME SEGMENTATION MODULE | CORRELATION CALCULATOR | PEAK EXTRACTOR | DIRECTION ESTIMATOR |

SOUND DIRECTION

# FIG. 19

SOUND SOURCE j

$\theta_{HMj}$

$\theta_{HMj}$

d

$M_L$

$M_R$

2r

# FIG. 20

EP 1 691 344 B1

100 AUTOMATIC SPEECH RECOGNITION SYSTEM

# FIG. 21

60 STREAM TRACKING MODULE

SOUND DIRECTION
PITCH

63

COMPARATOR → SOUND DIRECTION

PREDICTOR 62

SOUND
DIRECTION
HISTORY
MEMORY 61

# FIG. 22

($\theta$j. f$_1$)

INPUT STREAM FEATURE VECTOR

PREDICTED STREAM FEATURE VECTOR

t1

t

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Kazuhiro Nakadai et al.** A humanoid Listens to three simultaneous talkers by Integrating Active Audition and Face Recognition. *IJCAI-03 Workshop on Issues in Designing Physical Agents for Dynamic Real-Time Environments: World Modeling, Planning, Learning and Communicating,* 117-124
- **Nakadai et al.** Robot recognizes three simultaneous speech by active audition. *Proceedings of the IEEE International Conference on Robotics and Automation,* 14 September 2003, vol. 1-3, 398-405

- **S. F. Boll.** A spectral subtraction algorithm for suppression of acoustic noise in speech. *Proceedings of 1979 International conference on Acoustics, Speech, and signal Processing (ICASSP-79),* 1979
- **J. J. Bowman ; T.B.A. Senior ; P.L.E. Uslenghi.** Electromagnetic and Acoustic Scattering by simple shapes. Hemisphere Publishing Co, 1987